Europäisches Patentamt

European Patent Office

Office européen des brevets

(19)

(11) **EP 0 830 394 B1**

(12) **FASCICULE DE BREVET EUROPEEN**

(45) Date de publication et mention
de la délivrance du brevet:
**17.03.1999 Bulletin 1999/11**

(21) Numéro de dépôt: **96918665.9**

(22) Date de dépôt: **01.06.1996**

(51) Int Cl.$^6$: **C08F 10/00**, C08F 210/16,
C08F 2/00, G05B 13/02,
G05D 21/02

(86) Numéro de dépôt international:
**PCT/EP96/02408**

(87) Numéro de publication internationale:
**WO 96/41822 (27.12.1996 Gazette 1996/56)**

(54) **METHODE DE REGULATION DE PROCEDES DE SYNTHESE DE PRODUITS CHIMIQUES**

VERFAHREN ZUR REGULATION VON PROCESSEN ZUR SYNTHESE CHEMISCHER PRODUKTE

METHOD FOR CONTROLLING CHEMICAL SYNTHESIS PROCESSES

(84) Etats contractants désignés:
**AT BE DE ES FI FR GB IT NL PT SE**

(30) Priorité: **09.06.1995 BE 9500506**

(43) Date de publication de la demande:
**25.03.1998 Bulletin 1998/13**

(73) Titulaire: **Solvay Polyolefins Europe-Belgium
(Société Anonyme)
1050 Bruxelles (BE)**

(72) Inventeur: **DE SELLIERS, Jacques
B-1050 Bruxelles (BE)**

(74) Mandataire: **Destryker, Elise Martine et al
Solvay Polyolefins Europe-Belgium
(Société Anonyme)
Département de la Propriété Industrielle
310, rue de Ransbeek
1120 Bruxelles (BE)**

(56) Documents cités:
EP-A- 0 124 333     EP-A- 0 176 611
EP-A- 0 398 706     EP-A- 0 486 262
EP-A- 0 658 570     EP-A- 0 710 901
WO-A-93/24533

- JOURNAL OF AUTOMATIC CHEMISTRY,
  SEPT.-OCT. 1994, UK, vol. 16, no. 5, ISSN
  0142-0453, XP002012883 ALCANTARA R ET AL:
  "Automation of a fixed bed continuous-flow
  reactor"
- DATABASE WPI Section Ch, Week 9410 Derwent
  Publications Ltd., London, GB; Class A18, AN
  94-077748 XP002012886 & JP 06 028 009 A
  ( ASAHI CHEM IND CO LTD) , 4 Février 1994
- DATABASE WPI Section Ch, Week 9406 Derwent
  Publications Ltd., London, GB; Class A12, AN
  94-046005 XP002012887 & JP 06 003 243 A
  ( ASAHI CHEM IND CO LTD) , 11 Janvier 1994
- INDUSTRIAL AND ENGINEERING CHEMISTRY,
  PROCESS DESIGN AND DEVELOPMENT, OCT.
  1972, USA, vol. 11, no. 4, USA, XP002012884
  FRIEDMAN P ET AL: "Optimization of a
  simulation model of a chemical plant"
- CHEMICAL ENGINEERING PROGRESS, vol. 79,
  no. 6, NEW YORK, pages 77-83, XP002012885
  ARDELL G ET AL.: "Model Prediction for Reactor
  Control"

EP 0 830 394 B1

## Description

La présente invention concerne une méthode de régulation de procédés de synthèse de produits chimiques. Elle concerne également un dispositif de régulation pour la mise en oeuvre de cette méthode, ainsi qu'un procédé de synthèse, en particulier de polymère, régulé par cette méthode.

Dans un procédé de synthèse de produits chimiques conduit conventionnellement, des régulateurs de type PID (proportionnel - intégral - différentiel) sont utilisés pour réguler individuellement un nombre plus ou moins important de grandeurs (températures, débits. pressions, ...) ayant une influence sur le déroulement de la synthèse. En d'autres termes, pour chaque température, débit ou pression à réguler, on mesure en continu (ou par intermittence) sa valeur effective, et un régulateur PID compare cette valeur effective à une valeur de consigne et agit sur la grandeur à commander de façon à réduire, le cas échéant, la différence entre la valeur de consigne et la valeur mesurée.

Vu la complexité de la plupart des procédés industriels de synthèse chimique, les valeurs de consignes des différents régulateurs doivent aujourd'hui encore être ajustées empiriquement pour obtenir finalement les propriétés souhaitées du produit synthétisé. On utilise à cette fin des recettes, qui fournissent des combinaisons de paramètres déterminées empiriquement pour obtenir, en régime stable, les propriétés souhaitées du produit synthétisé.

De ces recettes pourraient être déduites, à l'aide d'outils statistiques plus ou moins sophistiqués, des relations empiriques entre les grandeurs réglées et les propriétés du produit synthétisé. Il est cependant évident que ces relations empiriques ne peuvent guère tenir compte des multiples interdépendances existant entre les différentes grandeurs réglées séparément, pas plus que des perturbations inconnues telles que les teneurs en impuretés des matières premières.

Il est aussi évident qu'une régulation classique à boucle fermée, utilisant comme corrections de retour des mesures de propriétés essentielles du produit synthétisé, est difficilement applicable à la plupart des procédés de synthèse. En effet. les temps morts intervenant soit dans le procédé, soit dans les mesures ou analyses utilisées comme corrections de retour, sont trop élevés, et les interdépendances entre les différentes grandeurs régissant le procédé sont trop complexes.

La demande internationale WO 93/24533 décrit une méthode de régulation d'un procédé de polymérisation d'une alpha-oléfine en phase gazeuse dans un réacteur horizontal dans laquelle des paramètres de commande permettent d'agir sur le déroulement du procédé en vue que l'indice de fluidité (MFR) du polymère soit égal à la valeur consigne correspondante, la méthode comprenant les étapes suivantes :

- déterminer les relations entre l'indice de fluidité du polymère sortant du réacteur et une première série de paramètres,
- contrôler cette première série de paramètres,
- calculer le MFR du polymère,
- adapter au moins un des paramètres de façon à ajuster le MFR calculé à une valeur prédéterminée.

Il est connu depuis longtemps que les procédés de synthèse. notamment les procédés de synthèse en continu de polymères (procédés de polymérisation), équipés de régulations avec ajustage empirique des valeurs de consignes, ont des inconvénients majeurs, qui peuvent être résumés comme suit :

- les démarrages du procédé de synthèse prennent beaucoup de temps et génèrent des quantités importantes de produit "hors normes" ;
- les transitions de qualité sont lentes, ce qui entraîne également la production de quantités importantes de produits de transition "hors normes" ;
- l'allure de marche du procédé, c'est-à-dire la masse de produit(s) synthétisée par unité de temps, peut difficilement être modifiée sans altérer les propriétés de ce ou ces produits ;
- la constance des propriétés essentielles du ou des produits synthétisés laisse souvent à désirer, même en régime stable.

Afin d'éviter un ajustage empirique des valeurs de consigne, il a été proposé dans la littérature spécialisée d'utiliser des méthodes de régulation de procédés de synthèse qui ont recours à des équations caractéristiques modélisant le procédé de synthèse pour relier certaines propriétés du ou des produits synthétisés aux conditions de marche du ou des réacteurs lors de la synthèse. Cependant, afin de limiter la complexité de ces équations caractéristiques, on considérait jusqu'à présent qu'on était obligé en pratique soit de considérer exclusivement le cas statique (régime stable), soit de se limiter à une modélisation empirique très simplifiée de la dynamique du procédé. L'utilisation d'un modèle statique est limitée au contrôle d'un régime de production assez stable.

Dans le cas d'une modélisation empirique, les équations caractéristiques ne sont valables que pour une plage de validité étroite (à proximité du point où la modélisation a été effectuée). Dans les deux cas, les phases de démarrage et les phases de transition sont mal maîtrisées. Il est certes envisageable de "couvrir" une plage plus large de conditions de fonctionnement en procédant à une telle modélisation locale en plusieurs points distincts de l'espace des paramètres de fonctionnement, mais une telle approche devient prohibitive dès que l'on tente de réguler plusieurs grandeurs en agissant sur de multiples paramètres.

Il serait par conséquent souhaitable de disposer d'une méthode et d'un dispositif de régulation simples, mieux adaptés aux spécificités de la dynamique de procédés de synthèse de produits chimiques.

A cette fin la présente invention concerne une méthode selon la revendication 1, un procédé de synthèse selon la revendication 17 et un dispositif de régulation selon la revendication 18.

La présente invention concerne une méthode de régulation d'un procédé de synthèse d'au moins un produit chimique dans un appareillage comprenant au moins un réacteur (R) pouvant être assimilé à un réacteur parfaitement mélangé, dans laquelle une ou plusieurs grandeurs de commande (GC) permettent d'agir sur le déroulement du procédé en vue qu'une ou plusieurs grandeurs liées aux propriétés du produit et/ou au déroulement du procédé, appelées grandeurs réglées (GR), soient égales à des consignes correspondantes ($C_{GR}$) (ou du moins aussi proches que possible de celles-ci), ladite méthode comprenant les étapes suivantes :

(a) entrée de consignes concernant les grandeurs réglées ($C_{GR}$);
(b) calcul, au moyen d'un organe de prédiction (OP), de prédictions des grandeurs réglées ($P_{GR}$), sur la base de mesures des grandeurs de commande du procédé ($M_{GC}$);
(c) utilisation d'un organe de contrôle (OC) pour calculer des consignes des grandeurs de commande du procédé ($C_{GC}$), sur base des consignes ($C_{GR}$) et des prédictions ($P_{GR}$) des grandeurs réglées;
(d) transmission des consignes des grandeurs de commande du procédé ($C_{GC}$) à des actionneurs, ou à des organes de réglage contrôlant des actionneurs, afin d'agir sur le déroulement du procédé;

dans laquelle l'organe de prédiction (OP) est basé sur un modèle mathématique du procédé, appelé modèle direct (M), et est conçu de telle manière qu'on prédit la masse $M_{XR}$ d'au moins un constituant (X) dans le réacteur (R) par l'équation :

$$M_{XR} = LAG\ (F_{XRin} \cdot \tau_X,\ \tau_X)$$

dans laquelle :

- $F_{XRin}$ est le débit massique du constituant X entrant dans le réacteur R ;
- $\tau_X$ est le temps de séjour de x dans le réacteur (constante de temps), qui vaut

$$\tau_X = M_{XR}\ /\ (\Sigma\ Fxdis)$$

dans lequel :

- $M_{XR}$ désigne la dernière valeur calculée de la masse du constituant X présente dans le réacteur R ;
- $\Sigma\ Fxdis$ désigne la somme de tous les débits massiques Fxdis avec lesquels le constituant X disparaît du réacteur R, notamment par réaction et/ou par sortie du réacteur ;

- la fonction y = LAG (u , $\tau$) est la solution de l'équation différentielle

$$u = \tau \cdot \frac{dy}{dt} + y$$

calculée avec la valeur instantanée de u et de $\tau$, ainsi qu'avec la dernière valeur de y calculée.

L'avantage de cette méthode est que l'équation différentielle susmentionnée est résolue par un calcul algébrique simple, par exemple par la formule suivante (T désignant l'intervalle de temps, généralement petit par rapport à $\tau$, séparant les calculs successifs) ou par une formule équivalente à celle-ci :

$$y\,(t) = \frac{y(t\text{-}T) + u(t) \cdot \dfrac{T}{\tau(t)}}{1 + \dfrac{T}{\tau(t)}}$$

Dans le cas où les masses de plusieurs constituants sont évaluées comme exposé ci-dessus, la méthode de l'invention est particulièrement avantageuse dans la mesure où ces masses peuvent être calculées séquentiellement par de tels calculs algébriques simples, recalculés fréquemment (T < < τ en général). Par opposition, les méthodes traditionnelles nécessitent la résolution simultanée d'un système d'équations différentielles, ce qui exige généralement une grande puissance de calcul et des algorithmes de calcul numérique (intégration) sophistiqués ; il en résulte que la durée de chaque itération de calcul est élevée, et par conséquent une régulation de ce type réagit mal à des variations rapides.

Le procédé de synthèse régulé peut servir à la synthèse d'un composé monomérique ou polymérique ; de très bons résultats ont été obtenus pour la régulation de procédés de polymérisation. Le procédé s'étend aussi au cas où plusieurs produits utiles sont synthétisés simultanément dans le même procédé. Le procédé peut être continu ou discontinu (batch) ; la méthode de régulation de l'invention donne d'excellents résultats dans le cas de procédés continus. Le procédé de synthèse régulé peut éventuellement ne constituer qu'une partie d'un procédé plus vaste. dont les autres parties sont régulées d'une manière différente, ou ne sont pas régulées. Pour que la méthode de régulation de l'invention soit applicable, il faut qu'au moins un réacteur puisse être assimilé à un réacteur parfaitement mélangé, c'est-à-dire à un réacteur dans lequel les différentes grandeurs (température, concentrations des constituants présents, etc.) sont quasiment identiques en chaque point. D'autres réacteurs éventuels peuvent être du type piston ("plug-flow") : on les modélise mathématiquement par des temps morts. La méthode est également applicable à un procédé se déroulant dans plusieurs réacteurs disposés en série et/ou en parallèle, pouvant produire des produits aux propriétés identiques ou différentes.

Par "constituants", on entend désigner l'ensemble des substances présentes dans le réacteur et destinées à participer à la synthèse ou à la permettre : non seulement les réactifs de départ ainsi que le ou les produits synthétisés, mais également la ou les éventuelles substances ne subissant aucune transformation, telles que solvants, catalyseurs, etc.

Outre un ou plusieurs réacteurs, l'installation dans laquelle se déroule le procédé peut éventuellement comprendre d'autres dispositifs classiques tels que détendeurs, strippers, condenseurs, sécheurs, colonnes de distillation, etc. Généralement, ces dispositifs auxiliaires peuvent d'ailleurs être également considérés comme des réacteurs (parfaitement mélangés ou de type piston), même si aucune réaction chimique ne s'y déroule.

Dans le cas d'un procédé de polymérisation, les "grandeurs liées aux propriétés du produit" peuvent par exemple être choisies parmi la masse moléculaire, l'indice de fluidité en fondu, la masse volumique standard, la teneur en comonomère lorsqu'un comonomère est présent, etc.

Des exemples de "grandeurs liées au procédé" sont notamment la température et la pression régnant dans le réacteur, l'allure de marche du procédé, les concentrations des différents réactifs dans le réacteur, etc. L'allure de marche désigne la masse de produit synthétisée par unité de temps, qui n'est cependant pas forcément égale au débit de produit synthétisé sortant du réacteur : ainsi, à titre d'exemple, dans les phases de démarrage notamment, le débit massique de produit synthétisé sortant du réacteur est généralement très faible, voire nul. bien que la synthèse ait commencé, c'est-à-dire que ce débit sortant est alors inférieur à l'allure de marche. En régime stable, par contre, on peut assimiler l'allure de marche à la masse de produit synthétisé par unité de temps.

Des exemples de "grandeurs de commande" sont les débits de réactifs entrant dans le réacteur, la puissance fournie aux dispositifs de chauffage, etc. Ce sont ces grandeurs qui permettent d'agir sur le déroulement du procédé ainsi que, généralement, sur les propriétés du produit synthétisé.

La ou les consignes de la ou des grandeurs de commande sont transmises directement ou indirectement à des actionneurs classiques tels que notamment des vannes, des éléments chauffants, etc. "Indirectement" signifie que les grandeurs de commande peuvent être transmises par l'intermédiaire d'un ou plusieurs organes de régulation (contrôlant généralement une seule variable, par ex. des régulateurs PID) contrôlant le ou les actionneurs (régulation "locale").

Sur le plan matériel, l'organe de prédiction et l'organe de contrôle sont généralement des dispositifs de calcul classiques permettant d'effectuer des calculs en fonction de leur câblage ou de leur programmation ; il peut notamment s'agir d'ordinateurs ou de systèmes numériques de contrôle-commande (SNCC). Un seul dispositif peut avantageusement combiner les fonctions de prédiction et de contrôle. Le ou les dispositifs de calcul utilisés sont de préférence du type numérique, et fournissent périodiquement (par intermittence) les résultats de leurs calculs. Les intervalles de temps séparant la fourniture de ces résultats peuvent varier dans le temps, et peuvent également différer selon le résultat concerné : il est clair que des grandeurs à variation rapide doivent être recalculées plus fréquemment que des grandeurs à variation lente. Des registres à décalage peuvent être utilisés pour simuler matériellement les temps morts.

L'organe de prédiction est basé sur un modèle mathématique direct du procédé (M), dans lequel le réacteur (R) est assimilé à un réacteur parfaitement mélangé ; un ou plusieurs délais purs (temps morts) peuvent éventuellement être pris en compte pour représenter d'éventuels réacteurs de type piston. d'éventuels délais de transport ou délais d'obtention de résultats de mesures, ... .

L'organe de contrôle est de préférence basé sur l'inverse du modèle direct utilisé dans l'organe de prédiction (modèle inverse).

En général, la somme $\Sigma$ Fxdis de tous les débits massiques (Fxdis) avec lesquels le constituant X disparaît du réacteur R comprend deux termes :

* $FR_X$ qui désigne le débit massique suivant lequel X est consommé par une ou plusieurs réactions chimiques éventuelles ;

* $F_{Xout}$ qui désigne l'éventuel débit massique de X sortant du réacteur par soutirage en cours de réaction. dans le cas (habituel) où X n'est pas entièrement consommé par réaction dans ce réacteur ; ou encore, par exemple, par évaporation dans le cas d'un réacteur ouvert.

L'intérêt de la méthode est que les termes Fxdis sont en général proportionnels à $M_{XR}$ ; par exemple, on a en général

$$F_{Xout} = M_{XR} / \tau_R$$

($\tau_R$ désignant le temps de séjour du réacteur R)
et

$$F_{RX} = R_X \cdot M_{XR}$$

($R_X$ désignant la réactivité de X dans le réacteur R).

Dans ce cas, l'expression donnant $\tau_X$ se simplifie et devient :

$$\tau_X = 1 / (R_X + 1/\tau_R)$$

Cette expression est indépendante de $M_{XR}$, ce qui constitue une simplification extrêmement intéressante.

Un autre avantage de la méthode réside dans le calcul périodique du temps de séjour $\tau_X$. En effet, $\tau_X$ représente bien la dynamique du constituant considéré dans le réacteur. Ceci permet notamment de suivre l'évolution de ce paramètre, ce qui est important pour la compréhension de la dynamique du procédé, et par conséquent pour sa régulation. Au contraire, les méthodes empiriques de type "boîte noire" ne permettent pas d'accéder à ce paramètre.

Avantageusement, le calcul des prédictions des grandeurs réglées ($P_{GR}$) peut additionnellement tenir compte d'une ou plusieurs mesures de grandeurs réglées ($M_{GR}$), de grandeurs de commande ($M_{GC}$) et/ou d'autres grandeurs liées au déroulement du procédé ($M_{AP}$).

De même, avantageusement, le calcul des consignes des grandeurs de commande du procédé ($C_{GC}$) peut additionnellement tenir compte d'une ou plusieurs mesures de grandeurs réglées ($M_{GR}$), de grandeurs de commande ($M_{GC}$) et/ou d'autres grandeurs liées au déroulement du procédé ($M_{AP}$), identiques ou différentes de celles éventuellement prises en compte pour le calcul des prédictions des grandeurs réglées ($P_{GR}$).

Toutes les mesures dont il est question dans la présente description ne sont pas forcément des mesures directes, dans le sens où l'une ou plusieurs d'entre elles peuvent éventuellement être des mesures inférentielles, c'est-à-dire des valeurs obtenues par calcul à partir d'une ou plusieurs autres mesures directes. Ainsi, par exemple, l'allure de marche de certains procédés de synthèse exothermiques ne peut pas se mesurer directement, mais on peut en obtenir une mesure inférentielle par calcul, par exemple à partir de mesures (directes) du débit et des températures d'entrée et de sortie du fluide de refroidissement.

Dans le cas particulier de procédés de polymérisation, la ou les propriétés du polymère intervenant dans la régulation sont de préférence choisies parmi la masse volumique spécifique (MVS) du polymère, les propriétés rhéologiques du polymère à l'état fondu, et sa teneur en comonomère. En particulier, la ou les propriétés rhéologiques intervenant dans la méthode de régulation sont avantageusement l'indice de fluidité en fondu (melt index) du polymère et/ou une mesure de viscosité.

Avantageusement, on évalue une ou plusieurs propriétés du polymère en utilisant une technique choisie parmi la spectroscopie infrarouge proche (NIR), la spectroscopie infrarouge à transformée de Fourier (FTIR) et la résonance magnétique nucléaire (NMR).

En particulier, on peut avantageusement évaluer une ou plusieurs propriétés du polymère en appliquant une relation de corrélation préétablie aux résultats de mesures réalisées par spectroscopie infrarouge proche (NIR) à plusieurs longueurs d'onde prédéterminées en fonction de la nature du polymère, choisies entre 0,8 et 2,6 µm.

Davantage de détails concernant la réalisation de telles mesures dans le cadre de la régulation de procédés de polymérisation peuvent être trouvés dans la demande de brevet EP 328826 (US 5155184).

En vue de tenir compte d'écarts éventuels entre les mesures et les prédictions des grandeurs réglées, il peut être utile de recourir à une correction.

Un premier type de correction consiste en ce que la consigne d'au moins une grandeur réglée (CGR) soit corrigée sur la base de l'écart (avantageusement filtré) entre la mesure (MGR) et la prédiction (PGR) de cette grandeur réglée, de façon à ce que la régulation soit efficace (MGR = CGR) même en présence d'une erreur dans la prédiction de cette grandeur réglée. Cette technique est couramment désignée par l'expression "internal model control" (IMC).

Un second type de correction consiste en ce que le modèle (M) du procédé soit périodiquement adapté sur la base de l'écart (avantageusement filtré) entre les prédictions ($P_{GR}$) et les mesures ($M_{GR}$) des grandeurs réglées, de façon à ce que, ici également, le modèle du procédé fournisse des prédictions des grandeurs réglées ($P_{GR}$) aussi proches que possible (idéalement, égales) des mesures de ces grandeurs ($M_{GR}$), ce qui est indispensable à une régulation efficace.

L'adaptation consiste à recalibrer le modèle, c'est-à-dire à en recalculer un ou plusieurs paramètres ; normalement, le nombre de paramètres recalculés ne dépasse pas le nombre des grandeurs réglées pour lesquelles on dispose à la fois d'une prédiction et d'une mesure. Une resynchronisation (recalage dans le temps) de ces mesures est souvent souhaitable, surtout lorsqu'il s'agit de mesures de propriétés du produit synthétisé dont la durée d'obtention est longue. Ce second type de correction est plus avantageux dans la mesure où il permet d'adapter le modèle également sur le plan de sa dynamique.

L'adaptation concerne non seulement le modèle direct du procédé (organe de prédiction), mais également le modèle inverse (organe de contrôle).

Selon une variante avantageuse, les mesures ($M_{GR}$) des grandeurs réglées interviennent uniquement dans l'adaptation éventuelle du modèle du procédé, et n'interviennent pas directement dans le calcul des consignes des grandeurs de commande du procédé ($C_{GC}$).

C'est-à-dire que les mesures des grandeurs réglées n'interviennent pas dans la régulation proprement dite : l'avantage en est que la qualité de la régulation n'est ainsi pas affectée par la lenteur éventuelle de l'évaluation des propriétés du produit.

Un autre aspect de l'invention concerne une méthode de régulation telle que décrite ci-dessus, appliquée à un procédé de polymérisation, comprenant l'une ou plusieurs des étapes supplémentaires suivantes :

- calcul d'une consigne de température dans le réacteur en fonction d'une ou plusieurs consignes de propriétés du produit ; et transmission de cette consigne de température à un ou plusieurs actionneurs permettant de modifier la température dans le réacteur (éventuellement indirectement, c'est-à-dire par l'intermédiaire d'un ou plusieurs organes de régulation, par ex. des régulateurs PID, contrôlant le ou les actionneurs) ;

- calcul d'un bilan thermique pour le réacteur. sur base notamment de mesures de température; utilisation de ce bilan thermique de façon à déterminer la quantité de polymère synthétisé par unité de temps (allure de marche) et/ou la productivité du catalyseur et/ou la concentration d'au moins un réactif dans le réacteur ;

- calcul de la quantité de chaleur produite par la polymérisation, grâce à un calcul de la quantité du ou des réactifs qui polymérisent ; détermination par ce biais de la quantité la chaleur qu'il faut ajouter ou évacuer pour maintenir la température du réacteur ; utilisation du résultat dudit calcul (par exemple par feed-forward) pour améliorer la régulation de température, de façon à respecter au mieux la consigne de température, notamment en cas de modifications de l'allure de marche.

Ces variantes sont basées sur le lien qui existe entre la quantité du ou des réactifs participant à la réaction et la quantité de chaleur produite ou absorbée par la réaction.

Selon une variante avantageuse, la propriété $Px_R$ d'un constituant "x" dans le réacteur R, assimilé à un réacteur parfaitement mélangé, est calculée comme suit :

$$Px_R = LAG \ (Px_{IN}, \ Mx_R \ / \ Fx_{IN})$$

où "Px" est une propriété d'un constituant "x", répondant de manière substantielle à la loi de mélange linéaire $Px_{1+2} = w_1 \cdot Px_1 + w_2 \cdot Px_2$,

$w_1$ et $w_2$ étant les proportions massiques de deux fractions 1 et 2 de propriété $Px_1$ et $Px_2$ que l'on mélange ($w_1$ +

$w_2 = 1$) ;

$Px_{1+2}$ est la propriété de x à sa sortie du réacteur, après mélange ;

$Px_{IN}$ est la propriété du constituant "x" à son entrée dans le réacteur R ;

$Mx_R$ est la masse du constituant x dans le réacteur R ;

$Fx_{IN}$ est le débit massique du constituant x entrant dans le réacteur R.

Une transformation mathématique permet parfois de rendre linéaires (additives) certaines grandeurs qui ne le sont pas : par exemple, l'indice de fluidité en fondu d'un polymère (melt index) ne répond pas à une loi de mélange linéaire, mais bien son logarithme le calcul de $Px_{1+2}$ susmentionné s'effecue dès lors sur le logarithme de ce paramètre.

Selon une autre variante avantageuse, la méthode de régulation de l'invention comprend les étapes suivantes :

- entrée de consignes relatives à une ou plusieurs propriétés du produit à synthétiser, dans un algorithme maître ;
- entrée de la consigne d'allure de marche du procédé, dans un algorithme esclave;
- calcul des consignes de concentration des constituants dans le réacteur à l'aide de l'algorithme maître, en fonction notamment des consignes et des mesures de propriétés du produit ainsi que de mesures ou de prédictions des concentrations des différents constituants dans le réacteur ;
- transmission des consignes de concentration calculées par l'algorithme maître comme grandeurs d'entrée à l'algorithme esclave;
- calcul de consignes de débit des constituants entrant dans le réacteur, à l'aide de l'algorithme esclave, en fonction notamment de la consigne d'allure de marche du procédé, des consignes de concentration, et de mesures de débit des constituants entrant dans le réacteur, et
- transmission des consignes de débit calculées à l'aide de l'algorithme esclave à un ou plusieurs actionneurs (éventuellement indirectement, c'est-à-dire par l'intermédiaire d'un ou plusieurs organes de régulation. par ex. des régulateurs PID, contrôlant le ou les actionneurs) afin de régler les débits des constituants entrant dans le réacteur,

dans laquelle l'algorithme maître et/ou l'algorithme esclave sont mis en oeuvre comme décrit ci-dessus, c'est-à-dire en utilisant la fonction LAG pour calculer la masse d'au moins un constituant dans le réacteur.

Les algorithmes maître et esclave sont également mis en oeuvre au moyen d'un ou plusieurs dispositifs de calcul classiques. Selon une variante avantageuse, l'ensemble des calculs (prédiction, contrôle, etc.) de ces deux algorithmes sont effectués par un même dispositif de calcul.

Avantageusement, des mesures de température (par ex. température dans le réacteur, et/ou température d'entrée et/ou de sortie d'un éventuel fluide de refroidissement) interviennent comme grandeurs d'entrée supplémentaires dans l'organe de prédiction et/ou de contrôle.

De préférence, l'algorithme esclave prend également en compte des mesures de la composition de constituants présents dans ou sortant du réacteur.

De manière avantageuse, la méthode de régulation comprend en outre une étape de calcul à l'aide de l'algorithme esclave, en fonction des mesures de débits, de prédictions de concentrations transmises à l'algorithme maître pour calculer des prédictions de propriétés servant comme grandeurs d'entrée supplémentaires dans le calcul des consignes de concentrations.

Les algorithmes maître et esclave forment une régulation du type cascade. Il est particulièrement avantageux que l'algorithme maître et/ou l'algorithme esclave soient adaptatifs, c'est-à-dire que certains de leurs paramètres soient périodiquement recalculés (à intervalles réguliers ou irréguliers). Une telle adaptation permet notamment de garantir que le modèle mathématique décrit le plus fidèlement possible le procédé dans son état courant, même en cas de modification de certaines conditions opératoires (température, pression, allure de marche, etc.) et en cas de perturbations (empoisonnement du catalyseur, ...).

L'algorithme maître réalise le contrôle des propriétés du produit à l'aide d'un modèle basé sur des équations caractéristiques reliant les propriétés du produit aux concentrations des différents constituants dans le réacteur, ainsi qu'éventuellement à la température régnant dans le réacteur. L'algorithme esclave régule les concentrations d'un ou plusieurs constituants en agissant sur les débits d'alimentation d'un ou plusieurs constituants éventuellement différents.

L'intérêt de cette cascade "maître-esclave" réside dans le fait que le modèle maître détermine avec précision les concentrations de constituants nécessaires à l'obtention des propriétés voulues pour le produit synthétisé, et que le modèle esclave assure le respect des valeurs imposées par le maître. Piloté par le maître. l'esclave est par conséquent capable :

- d'amener rapidement les concentrations aux valeurs désirées par le maître et de les y maintenir;
- de contrôler efficacement l'allure de marche du procédé sans perturber les concentrations.

Cette cascade maître-esclave est particulièrement efficace car aussi bien le maître que l'esclave prennent en compte la dynamique du procédé grâce à l'utilisation de la fonction LAG dans les calculs.

L'algorithme esclave peut en outre être conçu de manière à fournir à l'algorithme maître des prédictions de concentrations fiables. De ces prédictions ou de mesures de concentrations, l'algorithme maître déduit des prédictions de propriétés fiables du produit en train d'être synthétisé dans le réacteur. En comparant ces prédictions de propriétés aux consignes de propriétés, l'algorithme maître peut, le cas échéant, intervenir et corriger les consignes de concentrations. Cette correction est possible avant même qu'un écart entre une variable et sa consigne ne se présente. La prise en considération de prédictions de propriétés obtenues à partir de prédictions ou de mesures de concentrations permet de réduire considérablement les fluctuations temporelles des propriétés du produit synthétisé et il en résulte une meilleure constance de la qualité du produit.

Si les propriétés du produit à synthétiser sont dépendantes de la température dans le ou les réacteurs, il est préférable de prévoir une régulation de la température par l'algorithme esclave. Ce dernier dresse le bilan thermique de chaque réacteur et détermine, au moyen du calcul de l'allure de marche, la quantité de chaleur qu'il faut ajouter ou évacuer pour respecter des consignes de température calculées par l'algorithme maître. De ces résultats il déduit des consignes d'entrée pour des organes de régulation thermique de l'appareillage de synthèse. Il sera apprécié que cette façon de procéder permet d'intervenir sur les organes de régulation thermique de l'appareillage de synthèse avant même que la température ne change. Des mesures de températures interviennent par ailleurs avantageusement comme grandeurs d'entrée supplémentaires dans l'algorithme esclave.

L'algorithme maître comprend avantageusement la structure suivante :

- un organe de prédiction, basé sur un modèle direct du procédé permettant de fournir une prédiction des propriétés du produit synthétisé en fonction de mesures et/ou de prédictions des concentrations des constituants ;
- un organe d'adaptation comparant les prédictions de propriétés calculées par l'organe de prédiction à des valeurs effectivement mesurées sur le produit synthétisé et déduisant de cette comparaison des paramètres d'adaptation, lesdits paramètres d'adaptation intervenant comme grandeurs d'entrée supplémentaires dans ledit organe de prédiction de l'algorithme maître ; et
- un organe de contrôle, basé sur un modèle inverse du procédé, pour calculer, en fonction des consignes et des prédictions de propriétés du produit à synthétiser. des consignes de concentrations pour l'algorithme esclave, lesdits paramètres d'adaptation intervenant également comme grandeurs d'entrée supplémentaires dans ledit organe de contrôle.

L'algorithme esclave comprend avantageusement la structure suivante :

- un organe de prédiction, basé sur un modèle direct du procédé permettant de fournir une prédiction des concentrations d'un ou plusieurs des constituants sur base d'un bilan de matière dans le réacteur ;
- un organe d'adaptation, comparant les prédictions de concentrations calculées par le modèle direct à des mesures de concentration et déduisant de cette comparaison des paramètres d'adaptation, lesdits paramètres d'adaptation intervenant comme grandeurs d'entrée supplémentaires dans ledit organe de prédiction de l'algorithme esclave ; et
- un organe de contrôle, basé sur un modèle inverse du procédé, pour calculer, en fonction de la consigne d'allure de marche, des consignes de concentration calculées par l'organe de contrôle de l'algorithme maître et des prédictions de concentration calculées par l'organe de prédiction de l'algorithme esclave, les consignes pour les débits entrant dans le réacteur, lesdits paramètres d'adaptation intervenant comme grandeurs d'entrée supplémentaires dans ledit organe de contrôle de l'algorithme esclave.

La dynamique du procédé est avantageusement décrite et calculée au moyen de fonctions du type $y = $ LAG $(u, \tau)$
cette fonction étant la solution de l'équation différentielle

$$u = \tau \cdot \frac{dy}{dt} + y$$

où les arguments $u$ et $\tau$ varient dans le temps. L'utilisation de cette fonction conformément aux théorèmes 1 et 2 exposés ci-dessous permet de résoudre de manière séquentielle les bilans de matière utilisés par l'algorithme esclave et de décrire la cinétique du procédé par des équations caractéristiques simples dans l'algorithme maître. La fonction LAG permet encore de réduire considérablement le volume des calculs nécessaires et rend par conséquent inutile l'utilisation d'ordinateurs rapides et puissants. De plus, cette fonction permet d'établir de façon particulièrement simple les modèles directs et inverses du procédé ou de certaines de ses parties.

Les principales qualités de la régulation proposée peuvent être résumées comme suit :

EP 0 830 394 B1

- anticipation : la régulation commence à corriger les perturbations mesurées avant même que leur effet ne se soit manifesté sur les mesures des propriétés (utilisation de prédictions de concentrations. de prédictions de propriétés et de prédictions de températures dans les algorithmes);

- précision même en présence de perturbations : le modèle direct et le modèle inverse sont recalibrés en permanence en utilisant les mesures des propriétés (adaptation);

- validité étendue : l'algorithme garde sa validité durant les transitions d'allure de marche et de qualité. ainsi que lors des démarrages et des arrêts (mise en équation de la dynamique du procédé, utilisation de prédictions pour les grandeurs dont les mesures impliquent des temps morts importants) ;

- simplicité : le développement et la mise en oeuvre sont facilités grâce à une méthode originale de mise en équation de la dynamique du procédé (fonction LAG).

Le procédé de synthèse à réguler est ainsi modélisé sous une forme qui est généralement qualifiée de "modèle de connaissance" ("first principle model"), c'est-à-dire que son modèle est élaboré à partir d'équations reflétant le déroulement physico-chimique détaillé du procédé. Une telle approche permet d'obtenir, au moyen d'un jeu d'équations relativement simple sur le plan mathématique, des résultats supérieurs à ceux qui auraient été obtenus au moyen d'un modèle empirique de type boîte noire, en fournissant notamment des paramètres reliés à des grandeurs réelles et une meilleure validité à l'extérieur de l'espace d'identification (extrapolation). La plupart des modèles empiriques utilisent des équations complexes, souvent d'ordre élevé si l'on désire obtenir une simulation correcte de la dynamique du procédé, et dont les paramètres (notamment les constantes de temps) doivent être identifiés pour un point de fonctionnement précis; le modèle n'est valable que dans le voisinage immédiat de ce point de fonctionnement. Une telle approche peut difficilement être généralisée à un grand nombre de points de fonctionnement dans le cas d'un procédé de synthèse chimique réel faisant intervenir de nombreuses grandeurs.

Au contraire, selon la méthode de régulation de l'invention, on utilise un ensemble d'équations simples, purement statiques : la dynamique du procédé est simulée par des fonctions simples (cf. la fonction LAG ci-dessus). Avantageusement, les temps de séjour (constantes de temps des équations) peuvent être recalculés aussi souvent qu'on le souhaite, ce qui ne pose aucun problème étant donné la simplicité des équations. On obtient en fin de compte un ensemble d'équations extrêmement simples et faciles à résoudre en temps réel, même à fréquence élevée.

La méthode de régulation proposée est avantageusement applicable à des procédés de synthèse, notamment en continu, de polymères (polymérisation), et notamment à la polymérisation en continu d'oléfines telles que par exemple l'éthylène ou le propylène, aussi bien en phase liquide qu'en phase gazeuse.

La présente invention concerne également un procédé de synthèse d'un ou plusieurs produits chimiques, régulé au moyen d'une méthode de régulation conforme à l'invention. En particulier, de très bons résultats ont été obtenus pour la régulation d'un procédé de synthèse en continu de polyéthylène par polymérisation d'éthylène dans au moins un réacteur, les réactifs comprenant l'éthylène, l'hydrogène et/ou un comonomère optionnel, la réaction de polymérisation ayant lieu dans un solvant en présence d'un catalyseur et une partie du contenu du réacteur étant prélevé en permanence ou par intermittence. Ce procédé peut aussi bien se dérouler en phase liquide qu'en phase gazeuse ; de préférence, il se déroule en phase liquide (dans un solvant).

La méthode s'applique de manière analogue à la synthèse du polypropylène (le monomère de départ principal étant dans ce cas le propylène au lieu de l'éthylène), du propane pouvant également être présent si le procédé se déroule en phase gazeuse. Pour le polypropylène, l'indice de fluidité en fondu est souvent désigné par MFI au lieu de MI.

L'invention concerne également un dispositif de régulation destiné à mettre en oeuvre la méthode de régulation de l'invention, ainsi qu'une installation de synthèse d'un ou plusieurs produits chimiques comprenant un tel dispositif de régulation.

De manière plus précise, l'invention concerne également un dispositif de régulation d'un procédé de synthèse d'un produit chimique dans un appareillage de synthèse comprenant au moins un réacteur, ledit dispositif comprenant :

- au moins une unité de calcul;
- des moyens pour entrer des consignes de propriétés du produit à synthétiser dans l'unité de calcul;
- des moyens pour entrer des consignes d'allure de marche du produit à synthétiser dans l'unité de calcul;
- des organes de mesure de débit des flux entrant dans le réacteur;
- des organes de mesure de la composition des flux sortant du réacteur;
- des organes de commande de débits (actionneurs) pour régler les débits des flux entrant dans le réacteur;
- des moyens de communication entre ladite unité de calcul, lesdits organes de mesures de débit et lesdits organes de régulation;

dans lequel :

- la masse d'au moins un constituant est calculée par la fonction LAG comme exposé ci-dessus;

- l'unité de calcul est apte à calculer à l'aide d'un algorithme maître, en fonction des consignes de propriétés, des consignes de concentration de réactifs dans le réacteur;
- l'unité de calcul est apte à calculer à l'aide d'un algorithme esclave, en fonction des consignes de production et des consignes de concentration, de consignes de débit pour les flux entrant dans le réacteur, ces consignes de débit étant transmises comme consignes d'entrée aux organes de régulation de débits;
- les mesures réalisées par les organes de mesure de débits interviennent comme grandeurs d'entrée supplémentaires dans ledit algorithme esclave. pour permettre à ce dernier de calculer, en fonction de ces mesures de débits, des prédictions de concentrations, ces prédictions de concentrations intervenant dans l'algorithme maître pour calculer des prédictions de propriétés utilisées comme grandeurs d'entrée supplémentaires dans le calcul des consignes de concentrations.

L'invention concerne également un dispositif de régulation tel que décrit ci-dessus, dans lequel :

- l'appareillage de synthèse comprend en outre :

    - des organes de régulation thermique apte à contrôler la température dans le réacteur, et
    - des capteurs de températures;

- l'algorithme maître est apte à calculer, en fonction des consignes de propriétés. des consignes de températures pour le réacteur;
- l'algorithme esclave est apte à :

    - calculer un bilan thermique pour le réacteur,
    - résoudre ce ou ces bilans thermiques de façon à déterminer la chaleur qu'il faut ajouter à, respectivement retrancher de la synthèse pour respecter les consignes de température, et
    - déduire de ce ou ces bilans thermiques des consignes d'entrée pour les organes de régulation thermique du réacteur, et
    - recevoir comme grandeurs d'entrée supplémentaires les mesures effectuées par les capteurs de température.

L'invention concerne également un dispositif tel que décrit ci-dessus, dans lequel des mesures effectuées par les capteurs de température interviennent comme grandeurs d'entrée supplémentaires dans l'algorithme maître.

L'invention concerne également un dispositif tel que décrit ci-dessus, comprenant :

- au moins un analyseur apte à fournir des mesures des propriétés intervenant dans l'algorithme maître; et
- des moyens pour entrer ces mesures de propriétés dans l'unité de calcul; ladite unité de calcul comprenant :
- un premier organe de prédiction, basé sur un premier modèle direct du procédé permettant la prédiction des propriétés du produit synthétisé, en fonction des prédictions de concentrations calculées par l'algorithme esclave;
- un premier organe d'adaptation, comparant les prédictions de propriétés calculées par le premier organe de prédiction aux valeurs effectivement mesurées sur le produit synthétisé et déduisant de cette comparaison des paramètres d'adaptation, intervenant comme grandeurs d'entrée supplémentaires dans ledit premier organe de prédiction ; et
- un premier organe de contrôle, basé sur un premier modèle inverse, pour calculer, en fonction des consignes et des prédictions de propriétés, des consignes de concentrations pour l'algorithme esclave, lesdits paramètres d'adaptation intervenant également comme grandeurs d'entrée supplémentaires dans ledit premier organe de contrôle.

L'invention concerne également un dispositif tel que décrit ci-dessus, comprenant en outre :

- au moins un analyseur apte à fournir des mesures de concentration des réactifs; et
- des moyens pour entrer ces mesures de concentration dans l'unité de calcul;

ladite unité de calcul comprenant :

- un deuxième organe de prédiction, basé sur un deuxième modèle direct permettant la prédiction des concentrations, en fonction du bilan de matière dans le réacteur;
- un deuxième organe d'adaptation, comparant les prédictions de concentrations calculées par le deuxième organe de prédiction aux mesures de concentration et déduisant de cette comparaison d'autres paramètres d'adaptation, intervenant comme grandeurs d'entrée supplémentaires dans ledit deuxième organe de prédiction; et

- un deuxième organe de contrôle, basé sur un deuxième modèle inverse, pour calculer, en fonction des consignes de production, des consignes de concentration calculées par l'algorithme maître et des prédictions de concentration du deuxième organe de prédiction, des consignes pour les débits entrant dans le réacteur, lesdits autres paramètres d'adaptation intervenant comme grandeurs d'entrée supplémentaires dans ledit deuxième organe de contrôle.

Un mode de réalisation concret de l'invention est illustré sur base d'un procédé de synthèse en continu de polyéthylène (PE), en se référant aux Figures 1 à 10. Celles-ci montrent :

Figure 1 :       un schéma d'un circuit de fabrication de polyéthylène;
Figure 2 :       un schéma simplifié de la structure d'une régulation avancée selon l'invention;
Figure 3 :       un schéma de principe de la régulation avancée appliquée au circuit de fabrication de la Figure 1;
Figure 4 :       un schéma de principe d'un algorithme de contrôle adaptatif, tel qu'utilisé dans le système de régulation avancée selon la Figure 2;
Figure 5 :       un schéma de la structure de l'algorithme maître dans le système de régulation avancée selon la Figure 2;
Figure 6 :       un schéma de la structure de l'algorithme esclave dans le système de régulation avancée selon la Figure 2;
Figure 7 :       le schéma général d'une méthode de régulation conforme à l'invention;
Fig. 8-10 :       le schéma de variantes particulières de la méthode de l'invention.

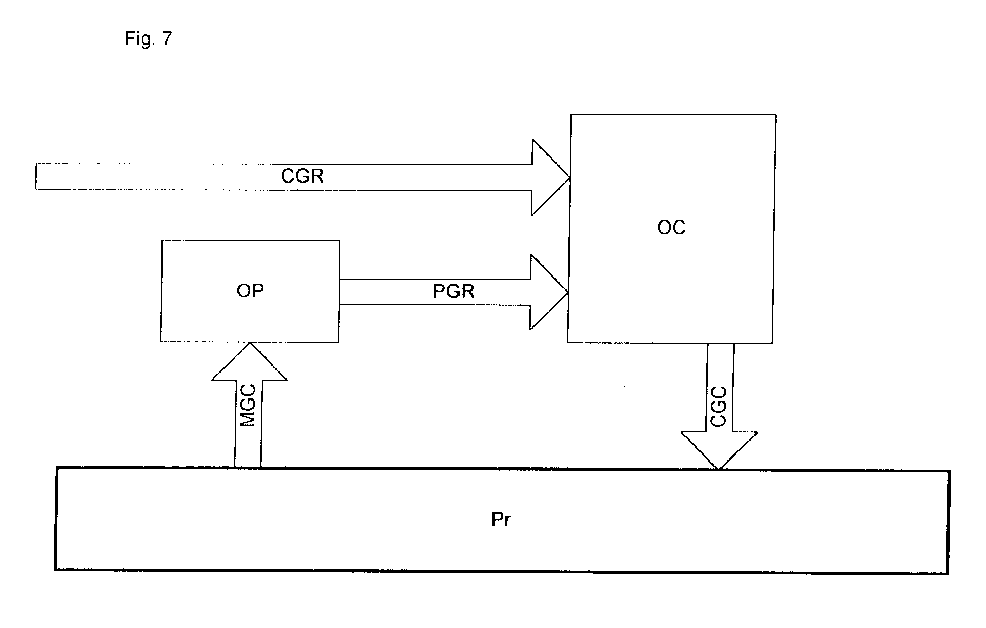

Sur la figure 7. on distingue tout d'abord le procédé de synthèse proprement dit (Pr), qui peut être contrôlé en imposant au moins une consigne d'une grandeur de commande (CGC) (par exemple un ou plusieurs débits de constituants entrant dans le réacteur, une température, etc.) à un actionneur adéquat (vanne, dispositif de chauffage ou de refroidissement, etc.). La régulation s'effectue au moyen d'un organe de contrôle (OC), basé sur le modèle mathématique inverse du procédé, et dont le rôle principal est de comparer la ou les consignes des grandeurs réglées (CGR) (par exemple une ou plusieurs propriétés du produit à synthétiser et/ou une ou plusieurs grandeurs liées au déroulement du procédé) à la ou aux prédictions de ces grandeurs (PGR). La ou les prédictions des grandeurs réglées (PGR) sont calculées par un organe de prédiction (OP), basé sur le modèle mathématique direct du procédé, sur la base de mesures des grandeurs de commande (MGC). On notera qu'aucune mesure de propriété(s) du produit synthétisé n'intervient dans la régulation.

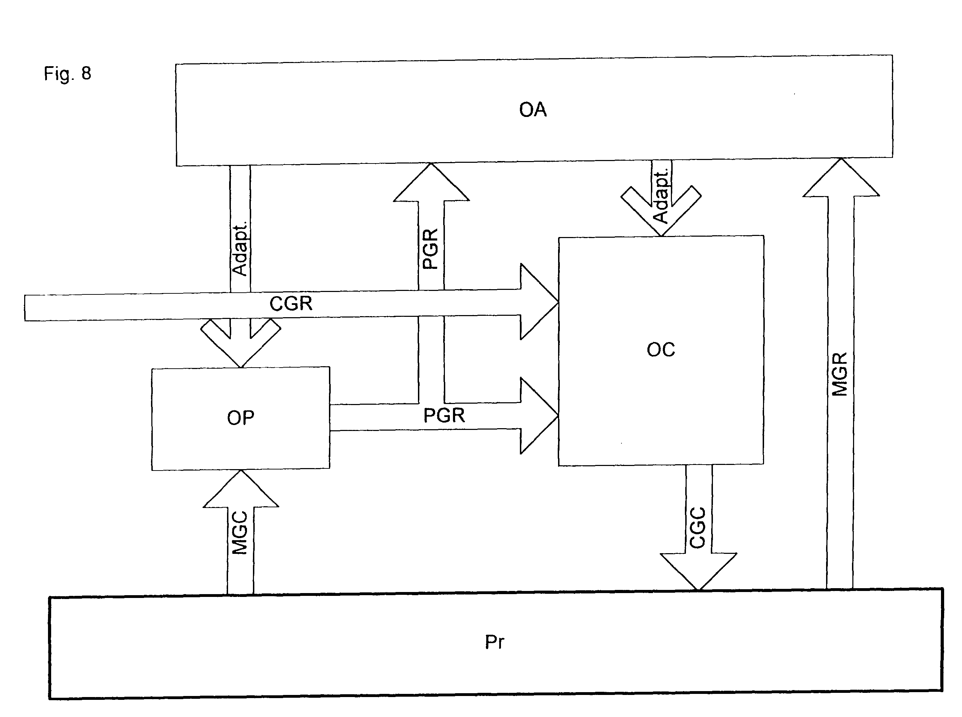

La figure 8 représente une variante de la méthode de la figure 7. dans laquelle le modèle mathématique du procédé est périodiquement adapté par un organe d'adaptation (OA), sur la base de l'écart (avantageusement filtré, ou traité numériquement) entre les prédictions (PGR) et les mesures ($M_{GR}$) des grandeurs réglées. Une resynchronisation (recalage dans le temps) de ces mesures et de ces prédictions est souvent nécessaire, par exemple lorsqu'il s'agit de mesures de propriétés du produit synthétisé dont la durée d'obtention est longue. L'organe d'adaptation (OA) transmet le résultat de ses calculs, c'est-à-dire ses instructions d'adaptation, à l'organe de prédiction (pour adapter le modèle direct du procédé) et à l'organe de contrôle (pour adapter le modèle inverse du procédé). On notera que la ou les mesures de propriété(s) du produit synthétisé ne sont pris(es) en compte que dans le processus d'adaptation, qui se déroule généralement à une fréquence beaucoup plus faible que le processus normal de contrôle. La lenteur éventuelle de ces mesures n'a donc aucun effet direct sur la qualité de la régulation.

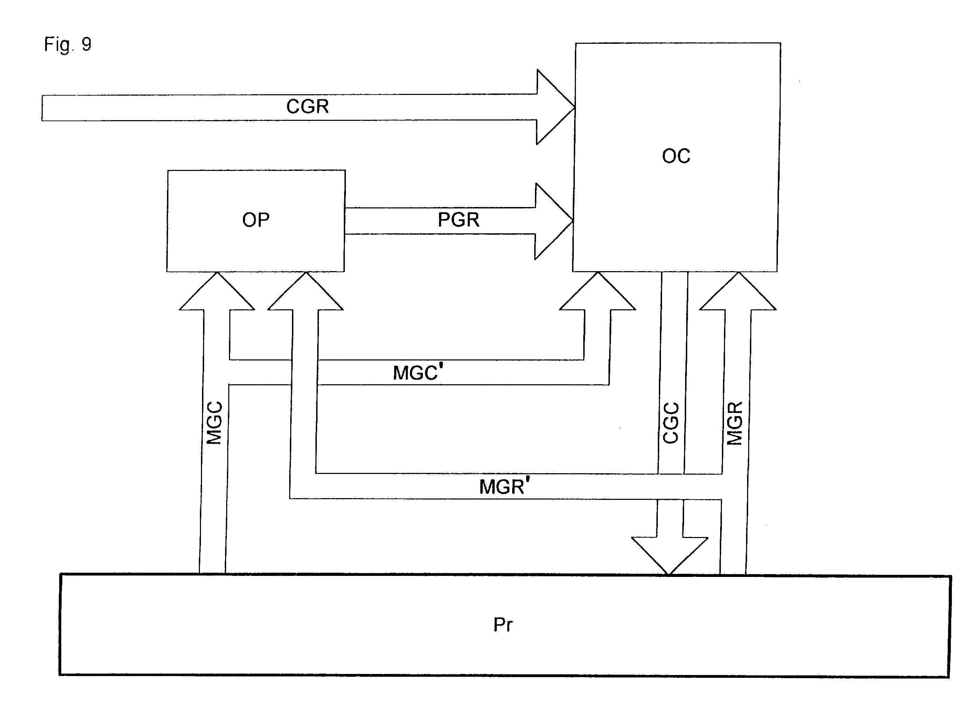

La figure 9 représente une autre variante de l'invention, dans laquelle une ou plusieurs mesures de grandeurs réglées ($M_{GR}$) sont prises en compte par l'organe de contrôle (OC), et une ou plusieurs mesures de grandeurs réglées ($M_{GR}'$) (éventuellement différentes) sont prises en compte par l'organe de prédiction (OP). De même, une ou plusieurs mesures de grandeurs de commande ($M_{GC}'$) peuvent en outre être prises en compte par l'organe de contrôle (OC).

Il va de soi qu'on pourrait créer une autre variante de la méthode de l'invention en combinant les variantes des figures 8 et 9, c'est-à-dire à la fois en utilisant un organe d'adaptation et en prenant en compte une ou plusieurs mesures de grandeurs de commande dans l'organe de contrôle, et/ou une ou plusieurs grandeurs de commande dans l'organe de prédiction et/ou dans l'organe de contrôle.

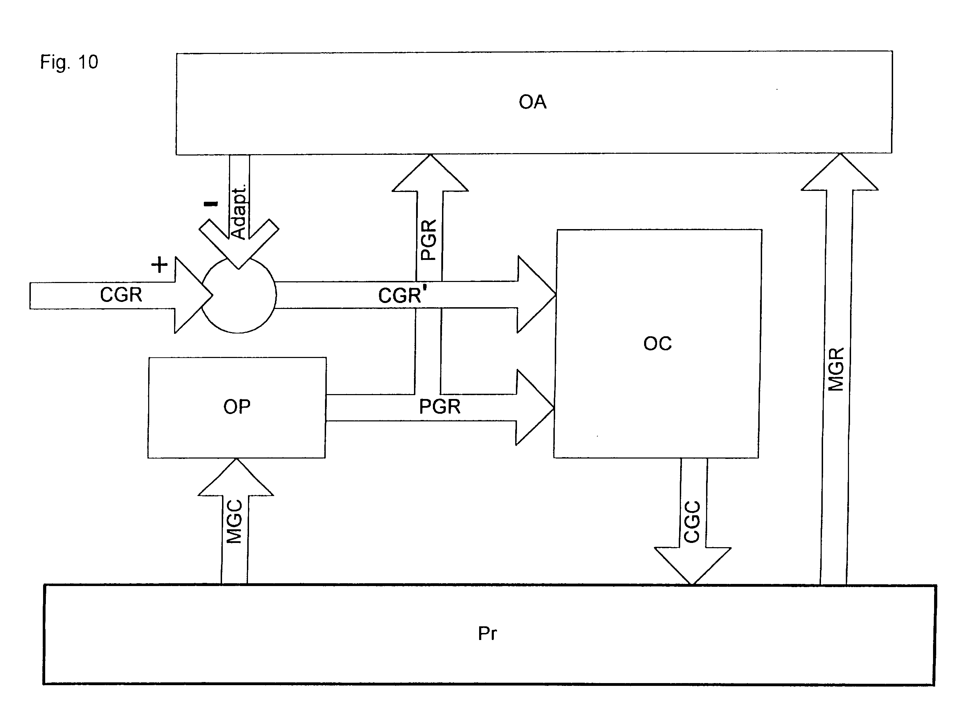

Dans la figure 10, le modèle mathématique du procédé n'est pas adapté au sens propre du terme, mais on utilise l'écart (avantageusement filtré) entre les mesures et les prédictions des grandeurs réglées pour corriger les consignes des grandeurs réglées ($C_{GR}$). En l'occurrence, cette correction a été ici représentée comme une simple différence : on soustrait à chacune des consignes de grandeurs réglées un terme correctif calculé par l'organe d'adaptation OA (qui n'est en fait ici qu'un organe de correction), ce qui fournit des consignes corrigées $C_{GR}'$, transmises à l'organe de contrôle OC. Il va de soi que dans certains cas, la correction peut impliquer des opérations plus complexes qu'une soustraction, par exemple une division (dans ce cas-ci, on peut cependant se ramener à une soustraction en considérant les logarithmes des grandeurs considérées). Cette méthode est communément appelée Internal Model Control (IMC).

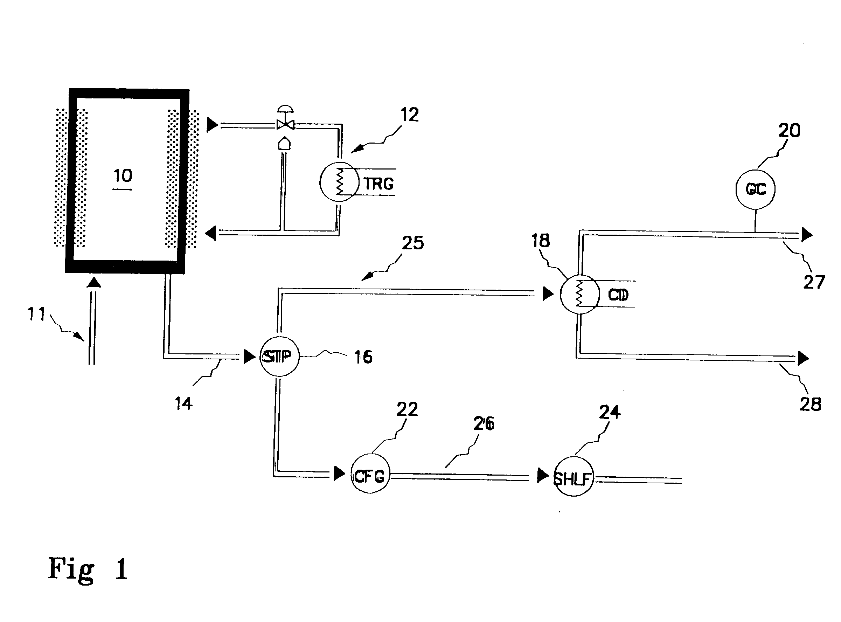

Si l'on se réfère à la Figure 1, qui représente schématiquement un circuit de synthèse en continu de polyéthylène (PE), la polymérisation de l'éthylène se fait dans un réacteur boucle 10, en suspension dans un solvant adéquat, tel que par exemple l'hexane. Le processus est continu, c'est-à-dire que les réactifs sont injectés en continu, et qu'une partie du contenu du réacteur 10 est continuellement soutirée. Une pompe de circulation (non représentée) assure l'homogénéité du contenu du réacteur 10.

Les réactifs introduits dans le réacteur sont l'éthylène "Et", l'hydrogène "Hy" et le butène "Bt" (cf. référence 11). Un catalyseur est également injecté en continu. Il importe de bien maîtriser les concentrations des réactifs dans le réacteur, car les propriétés de la résine PE sont principalement déterminées par les rapports de concentrations Hy/Et et Bt/Et.

La température de polymérisation dans le réacteur est un paramètre additionnel qui influence les propriétés de la résine PE. Vu que la réaction de polymérisation est fortement exothermique, la température du réacteur doit être régulée en ayant recours à un circuit de refroidissement 12.

Le réacteur 10 en fonctionnement contient donc du solvant, du polymère et des réactifs n'ayant pas encore réagi et du catalyseur. Son contenu est soutiré en permanence à travers la conduite de soutirage 14. Ce contenu soutiré entre dans un stripper STP 16, qui sépare le polymère PE et les fluides (solvant et réactifs). Ces fluides sont vaporisés par injection de vapeur d'eau et évacués dans un condenseur CD 18. Dans ce dernier le solvant est de nouveau condensé avant d'être recyclé. Les réactifs qui sont plus légers sont séparés du solvant et sont aussi recyclés. Un chromatographe en phase gazeuse GC (20) placé à la sortie du condenseur 18 permet de déterminer les concentrations Hy/Et, Bt/Et des réactifs.

Le polymère évacué du stripper 16 est concentré dans une centrifugeuse CFG 22, puis séché dans un sécheur à lit fluide SHLF 24, avant d'être envoyé vers le finishing pour y être granulé. Des échantillons sont prélevés à la sortie du sécheur 24 pour y mesurer les propriétés de la résine : cristallinité (mesurée par la masse volumique spécifique "MVS") et propriétés rhéologiques (indice de fluidité en fondu ("melt index (MI)" ou "melt flow index (MFI)") et viscosité en fondu "$\mu_2$", mesurée dans un écoulement capillaire sous un cisaillement de 100 s$^{-1}$).

La dynamique de ce processus de synthèse de PE est lente et complexe :

- Le réacteur boucle 10 se comporte comme un réacteur parfaitement mélangé. Dès lors, toute modification du débit d'alimentation d'un des réactifs ne se traduira que progressivement sur la concentration de ce réactif dans le réacteur. En effet. le nouveau débit doit se mélanger au volume tout entier du réacteur 10 pour l'amener à la nouvelle concentration d'équilibre.

- La mesure des concentrations des réactifs se fait par un chromatographe en phase gazeuse 20; il s'agit d'un appareil discontinu, qui procède par étapes successives : prélèvement d'un échantillon de gaz, analyse, puis élaboration des résultats. Il y a donc un temps mort (de 5 à 15 min.) entre les changements de concentration et leur mesure.

- Les propriétés du polymère fabriqué à chaque instant dépendent principalement des concentrations des réactifs. Toute modification de ces concentrations affecte donc instantanément les propriétés du polymère fabriqué. Par contre, les propriétés moyennes dans le réacteur ne se modifient que progressivement. car le polymère fraîchement produit doit se mélanger au polymère déjà présent dans le réacteur 10 (temps de séjour : ± 2 h).

- Lorsque le polymère est soutiré du réacteur 10, il subit à nouveau une série de mélanges dans les différents appareils (STP, CFG et SHLF) destinés à le sécher (temps de séjour : ± 2 h). Des échantillons de polymère sont alors prélevés et analysés par le laboratoire de l'usine. Les résultats de ces analyses ne seront donc communiqués à la fabrication qu'après un nouveau temps mort, qui peut être important (± 2 h).

Modélisation du procédé à l'aide d'une fonction LAG

Selon la méthode de l'invention, la modélisation dynamique d'un procédé de synthèse en continu est réalisée en ayant recours à des hypothèses de mélanges parfaits et de délais purs. Les mélanges parfaits sont mis en équation au moyen d'une fonction bien connue des ingénieurs, la fonction "LAG", ou filtre passe-bas (du 1er ordre) : cette fonction est linéaire et aisément programmable.

Elle est définie comme suit : y = LAG (u , $\tau$)
(dit "LAG de u durant $\tau$") comme étant la solution de l'équation différentielle

$$u = \tau \cdot \frac{dy}{dt} + y$$

dont les arguments u et $\tau$ varient dans le temps.

Cette équation peut se résoudre numériquement (même en temps réel) par une équation algébrique du 1er ordre, ayant pour arguments les variables suivantes :

- la période d'échantillonnage "T" (ou temps écoulé depuis la dernière itération)
- le temps de séjour (ou "constante" de temps) "$\tau$" à l'instant "t"
- la grandeur d'état "y" à l'instant précédent "t-T"
- la grandeur de commande "u" à l'instant présent "t"

(u et r représentent en fait les valeurs mesurées ou calculées à l'instant "t" sur les grandeurs "u" et "$\tau$", que l'on suppose avoir été constantes dans tout l'intervalle précédent "T").

De préférence, T est petit par rapport à $\tau$ (par exemple au moins 10 fois plus petit), de façon à augmenter la précision du calcul.

La solution de l'équation susmentionnée peut se calculer par exemple par la formule suivante :

$$y(t) = y(t\text{-}T) \cdot e^{-T/\tau(t)} + u(t) \cdot ( 1 - e^{-T/\tau(t)} )$$

ou encore, plus simplement (approximativement) :

$$y(t) = \frac{y(t\text{-}T) + u(t) \cdot \dfrac{T}{\tau(t)}}{1 + \dfrac{T}{\tau(t)}}$$

La modélisation du procédé à l'aide de la fonction LAG se base sur les théorèmes suivants :

Soit un réacteur parfaitement mélangé (CSTR), de volume $V_R$. Divers constituants (réactifs ou inertes) l'alimentent, parmi lesquels le réactif "x" (débit entrant $Fx_{IN}$) ayant la propriété "$Px_{IN}$" à l'entrée. On mesure également le débit de sortie "$F_{OUT}$" (soutirage).

Théorème 1: Application de la méthode LAG au calcul d'un bilan massique :

A chaque instant, la masse "$Mx_R$" d'un constituant "x" dans un réacteur parfaitement mélangé (CSTR) est égale au LAG du produit du débit massique entrant "$Fx_{IN}$" par un temps "$\tau_X$", durant ce même temps "$\tau_X$" :

$$Mx_R = LAG\ (Fx_{IN} \cdot \tau_X, \tau_X) \qquad \text{(en kg)}$$

Le temps "$\tau_X$" est le "temps de séjour de x"; il vaut la masse du constituant $Mx_R$, divisée par la somme des débits massiques "sortants" (quantité consommée par réaction "FRx", débit sortant du réacteur "$Fx_{OUT}$", etc.).

$$\tau_X = Mx_R / (Fx_{OUT} + FRx + ...) \qquad \text{(en h)}$$

Ce théorème donne ainsi une méthode exacte pour le calcul dynamique (même en temps réel) des concentrations dans un réacteur parfaitement mélangé. En effet, la concentration "$Cx_R$" du constituant "x" exprimée en kg/m$^3$ vaut, si "$V_R$" est le volume du réacteur :

$$Cx_R = Mx_R / V_R \qquad \text{(en kg/m}^3\text{)}$$

Connaissant le débit volumique total "$FV_{OUT}$" sortant du réacteur. on définit le temps de séjour du réacteur "$\tau_R$" :

$$\tau_R = V_R / FV_{OUT}$$

Dès lors, le débit massique "$Fx_{OUT}$" du constituant "x" en sortie du réacteur (soutirage) vaut :

$$Fx_{OUT} = Mx_R / \tau_R$$

On remarquera que si "x" est un inerte (ne subissant pas de réaction et ne sortant du réacteur que par soutirage), on a :

$$\tau_X = \tau_R$$

Par ailleurs, dans le cas fréquent où la vitesse de réaction de "x" est proportionnelle à sa concentration $Cx_R$, avec un facteur de proportionnalité $R_X$, on a : $FRx = R_X . Mx_R$ et dès lors

$$\tau_X = 1 / (R_X + 1/\tau_R)$$

Théorème 2 : Application de la méthode LAG au calcul d'une propriété d'un mélange :

Soit une propriété "Px" d'un constituant, répondant à la loi de mélange linéaire :

$$Px_{1+2} = w_1 . Px_1 + w_2 . Px_2$$

où $w_1$ et $w_2$ sont les fractions massiques de propriété $Px_1$ et $Px_2$. (avec $w_1 + w_2 = 1$).

A chaque instant la propriété $Px_R$ dans un réacteur parfaitement mélangé (CSTR) est égale au LAG de la propriété à l'entrée $Px_{IN}$, durant un temps de séjour qui vaut le rapport de la masse $Mx_R$ du constituant dans le réacteur divisé par le débit massique entrant (et/ou apparaissant par réaction) $Fx_{IN}$ :

$$Px_R = LAG (Px_{IN}, Mx_R / Fx_{IN})$$

Il est ainsi possible de tenir compte de la dynamique du procédé, et de recalculer en permanence ses constantes de temps.

Comme exposé précédemment, les "propriétés" dont il est question ici peuvent dans certains cas avoir subi une transformation mathématique les rendant linéaires (par exemple, le logarithme de l'indice de fluidité en fondu d'un polymère peut être considéré comme répondant à une loi de mélange linéaire).

Principe de la régulation :

Le modèle du procédé de synthèse étant établi, il faut un algorithme qui calcule les paramètres nécessaires à la régulation de ce procédé.

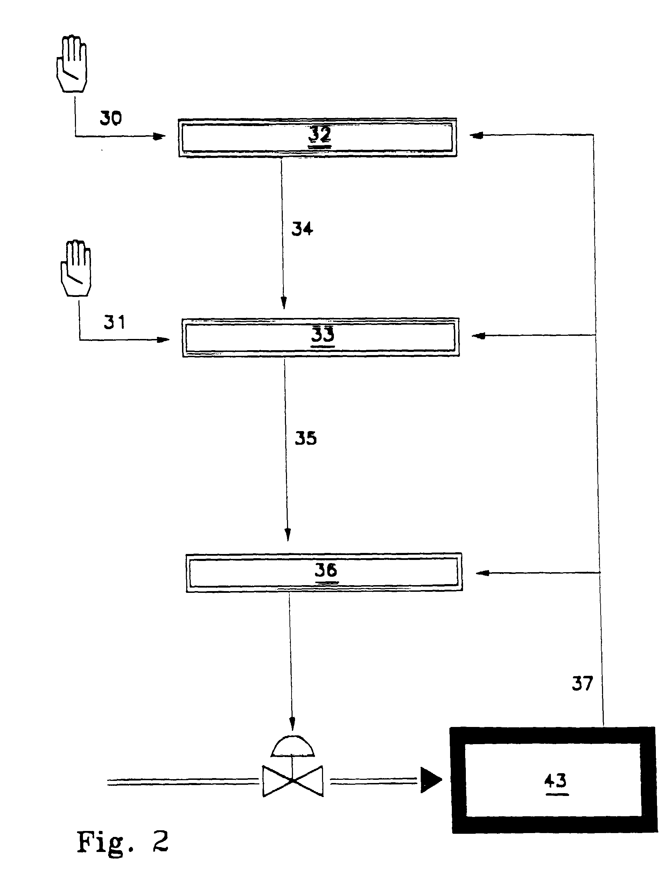

La Figure 2 montre un schéma général simplifié du type de régulation avancée (Advanced Process Control ou "APC") adopté pour le procédé de polymérisation décrit plus haut. On voit que ce système de régulation comprend une cascade de deux algorithmes, cette cascade pilotant notamment les régulateurs PID des débits d'alimentation en réactifs.

Les deux algorithmes en cascade, appelés algorithme maître et algorithme esclave, sont tous deux des algorithmes dynamiques adaptatifs basés sur des modèles issus de la connaissance du processus (par opposition aux modèles empiriques), basés notamment sur les bilans de matière et la cinétique du procédé régulé. Ils utilisent la fonction LAG prédéfinie.

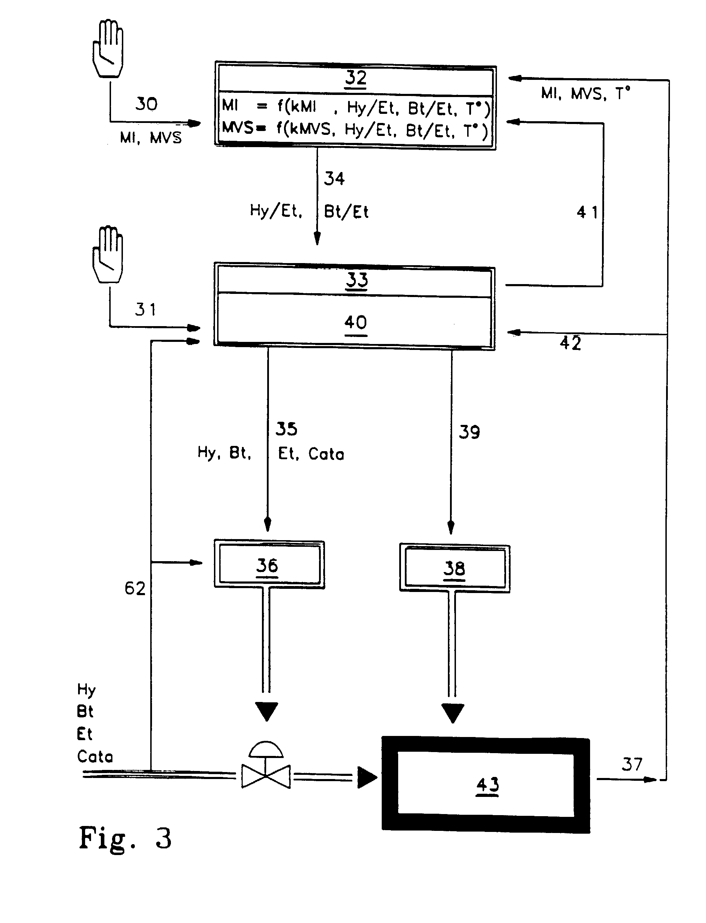

Sur la Figure 3, qui montre le principe du système de régulation dans le contexte du procédé de polymérisation décrit plus haut, on voit que :

- l'algorithme maître est basé sur les équations caractéristiques des catalyseurs, c'est-à-dire des équations fournissant les propriétés du PE en fonction de la température de polymérisation et des concentrations des réactifs dans le réacteur; il fournit à l'algorithme esclave les consignes des concentrations en réactifs pour satisfaire les consignes pour les propriétés du PE;
- l'algorithme esclave est basé sur un bilan matière et la cinétique chimique des réactions; il fournit aux régulateurs des débits d'alimentation les consignes de débits de réactifs nécessaires pour satisfaire les consignes de concentrations imposées par l'algorithme maître et la consigne d'allure de marche du procédé. De préférence, il calcule également un terme anticipatif ("feed-forward") pour la consigne de température, améliorant la régulation de température lors des changements d'allure de marche.

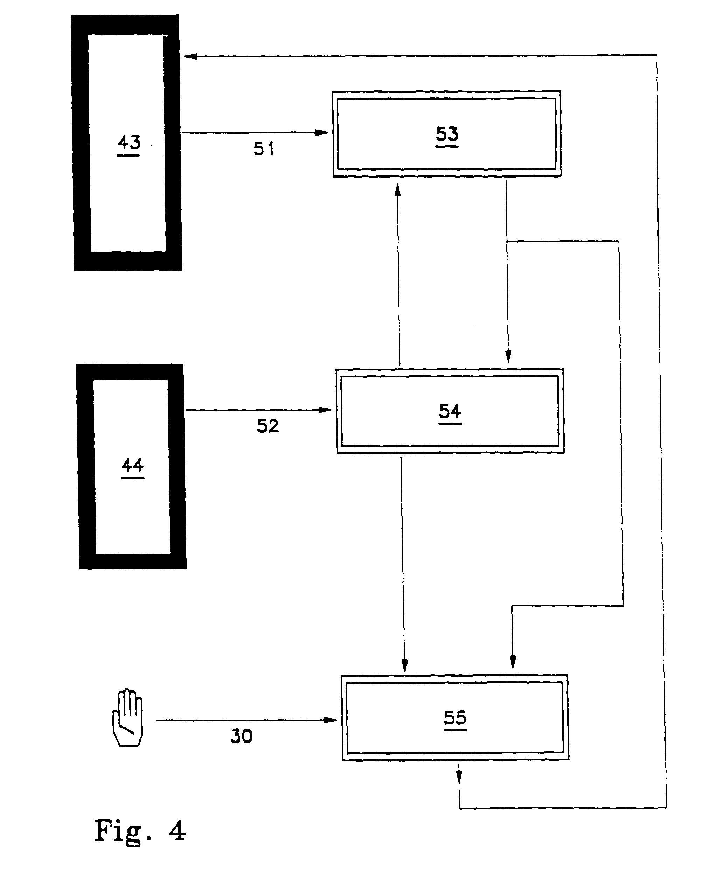

Ce type de régulation n'est d'une précision parfaite que si le modèle est parfait et prend en compte toute les perturbations possibles. Cela n'est en général pas le cas. C'est pourquoi en général (voir Figure 4) on adapte en continu le modèle direct (et le modèle inverse) en comparant les prédictions aux mesures des propriétés. Cette "adaptation" du modèle permet de maintenir sa précision en présence de perturbations non modélisées, et ainsi d'obtenir une régulation plus précise en toutes circonstances.

L'algorithme esclave

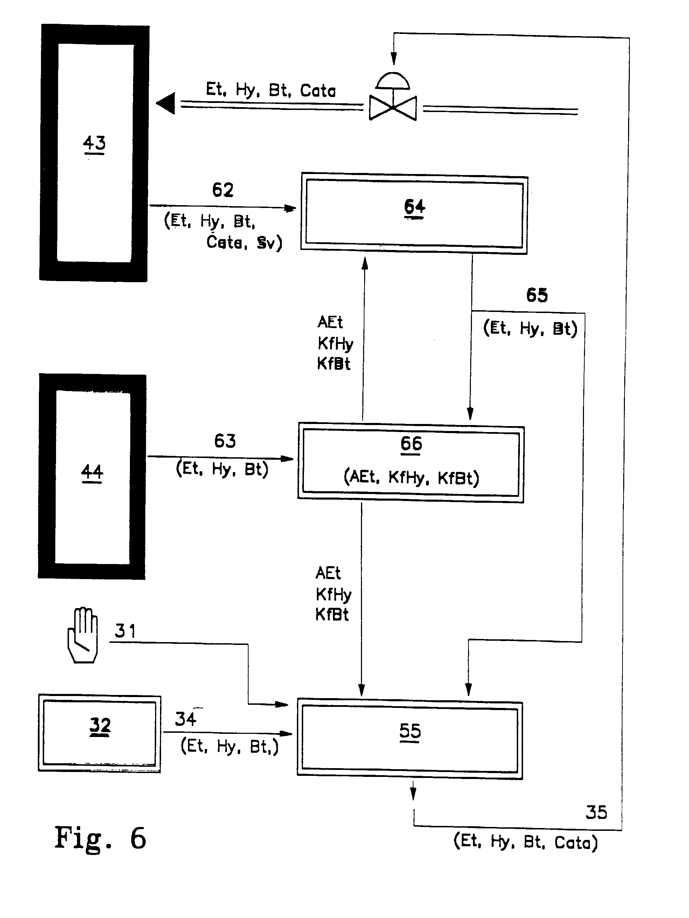

La Figure 6 illustre le principe de l'algorithme esclave :

1. un organe de prédiction utilisant un modèle direct du procédé prédit. à partir des mesures des débits alimentant le réacteur. les concentrations en réactifs et en polymère;
2. un organe d'adaptation compare les concentrations en éthylène (Et), hydrogène (Hy) et butène (Bt) mesurée par un analyseur (chromatographe à gaz) aux valeurs prédites par le modèle direct, de façon à déterminer trois paramètres d'adaptation :

- l'activité spécifique du catalyseur pour l'éthylène "AEt", en kg/h de polyéthylène par kg de catalyseur et par kg/m$^3$ d'éthylène
- l'erreur de gain sur la mesure de débit d'hydrogène "KfHy"
- la pureté de l'alimentation en butène "KfBt"

3. l'organe de contrôle calcule, à partir des consignes de concentration calculées par l'algorithme maître et de la consigne d'allure de marche, les consignes pour les débits d'alimentation des réactifs ; ces consignes de débit sont composées d'un feed-forward basé sur le modèle inverse, et d'un feed-back proportionnel à l'écart entre le modèle direct et les consignes de concentration.

Pour comprendre les calculs effectués par l'algorithme esclave, dans le cas d'un procédé de synthèse de polyéthylène, il faut d'abord savoir qu'il est généralement admis que la vitesse de polymérisation "VitP$_{Et}$" est proportionnelle :

- à la concentration en Et non polymérisé cEt$_R$ (en kg/m$^3$),
- à la concentration en catalyseur actif dans le réacteur cCA$_R$ (en kg/m$^3$), et
- à un facteur de proportionnalité, fonction (difficilement quantifiable) de la température, des concentrations en Hy, en Bt et en co-catalyseur, de la présence de poisons, etc. Ce terme est appelé "activité catalytique" pour l'éthylène A$_{Et}$. Sauf dysfonctionnement majeur (poison, etc.), il varie raisonnablement peu en cours de campagne.

$$VitP_{Et} = A_{Et}. \, cCA_R \, . \, cEt_R \qquad (kg/m^3.h)$$

La quantité d'éthylène "FpEt" qui polymérise dans le réacteur à chaque unité de temps ("débit de polymérisation") vaut donc, si V$_R$ est le volume du réacteur :

$$FpEt = VitP_{Et} \, . \, V_R \qquad (kg/h)$$

$$= A_{Et} \, . \, cCA_R \, . \, MEt_R$$

où MEt$_R$ est la masse d'éthylène en solution dans le réacteur (en kg)

On sait par ailleurs que la vitesse d'incorporation de l'Hy est environ 100 fois plus lente que l'Et, et 10 fois plus lente pour le Bt. On en déduit :

$$FpHy = A_{Et} \, . \, cCA_R \, . \, MHy_R \, / \, 100$$

$$FpBt = A_{Et} \, . \, cCA_R \, . \, MBt_R \, / \, 10$$

où MHy$_R$ est la masse d'hydrogène en solution dans le réacteur (en kg) et

$MBt_R$ est la masse de butène en solution dans le réacteur (en kg)

Le modèle esclave utilise maintenant les mesures suivantes :

$FEt_{IN}$ = débit d'alimentation en éthylène (monomère) (kg/h)
$FSv_{IN}$ = débit d'alimentation en solvant (hexane) (kg/h)
$FCA_{IN}$= débit d'alimentation en catalyseur (kg/h)
$FHy_{IN}$= débit d'alimentation en hydrogène (agent de transfert) (kg/h)
$FBt_{IN}$ = débit d'alimentation en butène (co-monomère) (kg/h)

Il utilise également les paramètres d'adaptation suivants :

$A_{Et}$ = "activité catalytique" pour l'éthylène
KfHy = erreur de gain sur la mesure de l'alimentation en hydrogène
KfBt = pureté de l'alimentation en butène.

Les calculs suivants sont effectués de façon séquentielle, dans l'ordre suivant, avec une fréquence élevée (l'intervalle de temps séparant chaque itération étant faible par rapport au plus petit des temps de séjour $\tau_X$).

Le volume du réacteur étant constant, le débit volumique sortant équivaut au débit volumique entrant (fluides incompressibles). Le débit volumique sortant "$FV_{OUT}$" peut dès lors être calculé comme la somme des débits massiques entrants divisés par la masse volumique qu'ils ont dans le réacteur :

$$FV_{OUT} = FSv_{IN}/650 + FEt_{IN}/950 + FBt_{IN}/600 \qquad (m^3/h)$$

(où les masses volumiques sont les suivantes : 650 kg/m$^3$ pour le solvant, 950 kg/m$^3$ pour le polyéthylène, 600 kg/m$^3$ pour le butène). On fait ici l'hypothèse que tout l'éthylène se transforme instantanément en polyéthylène, et on néglige le débit d'hydrogène et de catalyseur (quelques kg).

Le solvant est chimiquement inerte et ne sort du réacteur que par soutirage du réacteur. On calcule sa masse "$MSv_R$" dans le réacteur en utilisant le théorème 1 :

$$\tau_R = V_R / FV_{OUT} \qquad (h) \text{ (temps de séjour dans le réacteur)}$$

$$MSv_R = LAG (FSv_{IN} \cdot \tau_R , \tau_R ) \qquad (kg)$$

Le catalyseur se désactive avec une constante de temps "kd" ; la masse "$MCA_R$" de catalyseur actif dans le réacteur est calculée comme suit :

$$\tau_{CA} = 1 / (1/\tau_R + kd) \qquad (h)$$

$$MCA_R = LAG (FCA_{IN} \cdot \tau_{CA}, \tau_{CA}) \qquad (kg)$$

et donc la concentration "$cCA_R$" de catalyseur actif dans le réacteur vaut :

$$cCA_R = MCA_R / V_R \qquad (kg/m^3)$$

L'éthylène "sort" du réacteur dans le débit de soutirage ainsi que dans la réaction de polymérisation. Sa masse dans le réacteur "$MEt_R$" est calculée comme suit :

$$\tau_{Et} = 1/(1/\tau_R + A_{Et} \cdot cCA_R) \qquad (h)$$

$$MEt_R = LAG (FEt_{IN} \cdot \tau_{Et} , \tau_{Et}) \qquad (kg)$$

D'une façon similaire, on calcule la masse "brute" (non calibrée) d'hydrogène dans le réacteur "MHy$_{RAW}$" :

$$\tau_{Hy} = 1/ (1/\tau_R + A_{Et} . cCA_R / 100) \qquad (h)$$

$$MHy_{RAW} = LAG (FHy_{IN} . \tau_{Hy} , \tau_{Hy}) \qquad (kg)$$

La masse "MHy$_R$", corrigée pour prendre en compte l'erreur de gain sur la mesure de l'alimentation en hydrogène, vaut :

$$MHy_R = KfHy . MHy_{RAW} \qquad (kg)$$

Le rapport Hy:Et dans le réacteur vaut donc :

$$HyEt_R = MHy_R / MEt_R$$

D'une façon similaire, on calcule la masse de butène "brute" "MBtp$_{RAW}$" :

$$\tau_{Bt} = 1 / (1/\tau_R + A_{Et} . cCA_R / 10) \qquad (h)$$

$$MBt_{RAW} = LAG (FBt_{IN} . \tau_{Bt} , \tau_{Bt}) \qquad (kg)$$

La masse "MBt$_R$", corrigée pour prendre en compte la pureté de l'alimentation en butène, vaut :

$$MBt_R = KfBt . MBt_{RAW} \qquad (kg)$$

Le rapport Bt:Et dans le réacteur vaut donc :

$$BtEt_R = MBt_R / MEt_R$$

On a vu que le débit de polymérisation "FpEt" (allure de marche instantanée) vaut :

$$FpEt = A_{Et} . cCA_R . MEt_R \qquad (kg/h)$$

Le polymère étant inerte et ne subissant pas de réaction, sa masse dans le réacteur "MPE$_R$" vaut :

$$MPE_R = LAG (FpEt . \tau_R, \tau_R) \qquad (kg)$$

Le débit de polymère sortant du réacteur "FPE$_{OUT}$" vaut dès lors :

$$FPE_{OUT} = MPE_R / \tau_R \qquad (kg/h)$$

Adaptation du modèle esclave :

Le bloc d'adaptation utilise un analyseur (par exemple un chromatographe à gaz "GC") pour obtenir les mesures des concentrations dans le réacteur en éthylène "cEt$_{GC}$", en hydrogène "cHy$_{GC}$" et en butène "cBt$_{GC}$" (exprimées par exemple en kg/m$^3$). Ces mesures sont comparées aux valeurs prédites par le modèle direct, afin de déterminer les trois paramètres d'adaptation suivants :

- l'activité spécifique du catalyseur pour l'éthylène "AEt", en kg/h de polyéthylène par kg de catalyseur et par $kg/m^3$ d'éthylène
- l'erreur de gain sur la mesure de débit d'hydrogène "KfHy"
- la pureté de l'alimentation en butène "KfBt"

Le chromatographe à gaz fournit des mesures échantillonnées avec un retard d'environ 6 minutes.

Le calcul de l'activité spécifique pour l'éthylène "AEt" découle des égalités suivantes :

$$cEt_{GC} = cEt_R \qquad (kg/m^3)$$

$$= MEt_R / V_R$$

$$= LAG \ (FEt_{IN} \cdot \tau_{Et} , \tau_{Et}) / V_R$$

$$= LAG \ (FEt_{IN} / (1/\tau_R + A_{Et} \cdot cCA_R), \tau_{Et}) / V_R$$

$$\Rightarrow A_{Et}" = ( \ FEt_{IN} / LEAD \ ( \ cEt_{GC} \cdot V_R , \tau_{Et} ) - 1/\tau_R \ ) / cCA_R$$

La mesure $cEt_{GC}$ étant échantillonnée et bruitée, on ne souhaite pas la trouver dans un LEAD; dès lors, on utilise plutôt :

$$A_{et}' = LAG \ (A_{Et}" , \tau_{Et})$$

$$\approx LAG \ (FEt_{IN}/cCA_R, \tau_{Et}) / (cEt_{GC} \cdot V_R) - 1 / LAG \ (\tau_R \cdot cCA_R, \tau_{Et})$$

On tient compte du retard de 6 minutes sur la mesure de $cEt_{GC}$ en introduisant deux LAGs en série de 3 minutes chacun sur les valeurs du modèle, et on obtient la formule finale :

$$A_{et} = LAG \ ( \ FEt_{IN} / cCA_R , \tau_{Et} , 3/60, 3/60 \ ) / (cEt_{GC} \cdot V_R)$$

$$- 1/ LAG \ ( \ \tau_R \cdot cCA_R, \tau_{Et} , 3/60, 3/60 \ )$$

Le calcul du gain du débit d'hydrogène "KfHy" découle des égalités suivantes :

$$cHy_{GC} = cHy_R \qquad (kg/m^3)$$

$$= MHy_R / V_R$$

$$= KfHy \cdot MHy_{RAW} / V_R$$

$$\Rightarrow KfHy = cHy_{GC} \cdot V_R / MHy_{RAW}$$

On tient compte du retard de 6 minutes sur la mesure de $cHy_{GC}$ en introduisant deux LAGs en série de 3 minutes chacun sur la valeur du modèle, et on obtient la formule finale :

$$\Rightarrow KfHy = cHy_{GC} \cdot V_R / LAG \ ( \ MHy_{RAW} , 3/60, 3/60 \ )$$

D'une façon similaire à KfHy, on calcule le paramètre de correction pour la pureté du butène "KfBt" :

$$KfHy = cBt_{GC} \cdot V_R / LAG \ ( \ MBt_{RAW} , 3/60, 3/60 \ )$$

L'algorithme de régulation a pour entrées :

- les consignes de concentration calculées par l'algorithme maître; plus précisément les consignes pour les rapports de concentration $cHy_R/cEt_R$ "$HyEt_{SP}$" et $cBt_R/cEt_R$ "$BtEt_{SP}$" (en kg/kg)
- la consigne pour l'allure de marche du procédé $FpEt_{SP}$, fixée par l'opérateur
- la consigne pour la concentration en éthylène $cEt_{SP}$, fixée par l'opérateur;
- les concentrations calculées par le modèle.

Il calcule les consignes pour les débits d'alimentation des réactifs $FEt_{SP}$, $FCA_{SP}$, $FHy_{SP}$ et $FBt_{SP}$. Différents algorithmes peuvent être utilisés, parmi lesquels le MBPC (Model Based Predictive Control). Ils peuvent en général se décomposer en un feed-forward basé sur le modèle inverse, et un feed-back proportionnel à l'écart entre le modèle direct et les consignes de concentration.

<u>Régulation de l'alimentation en éthylène :</u>

Feed-forward : valeur pour maintenir la concentration actuelle, basée sur l'inversion de la valeur stationnaire de l'équation suivante :

$$MEt_R = LAG\ (FEt_{IN} \cdot \tau_{Et}\ ,\ \tau_{Et}) \qquad (kg)$$

$$\Rightarrow FEt_{FF} = MEt_R\ /\ \tau_{Et}$$

Feed-back : proportionnel à l'écart entre la consigne $cEt_{SP}$, et le modèle

$$FEt_{FB} = 5 \cdot (cEt_{SP} \cdot V_R - MEt_R)$$

Consigne :

$$FEt_{SP} = FEt_{FF} + FEt_{FB}$$

<u>Régulation de l'alimentation en catalyseur :</u>

Feed-forward : valeur pour maintenir la concentration actuelle, basée sur l'inversion de la valeur stationnaire de l'équation suivante :

$$MCA_R = LAG\ (FCA_{IN} \cdot \tau_{CA}\ ,\ \tau_{CA}\ ) \qquad (kg)$$

$$\Rightarrow FCA_{FF} = MCA_R\ /\ \tau_{CA}$$

Feed-back : proportionnel à l'écart entre la consigne $FpEt_{SP}$, et le modèle. selon la formule suivante :

$$FpEt = A_{Et} \cdot MEt_R \cdot MCA_R\ /\ V_R$$

$$\Rightarrow FCA_{FB} = 5 \cdot (FpEt_{SP}\ /\ (A_{Et} \cdot MEt_R\ /\ V_R) - MCA_R)$$

Consigne :

$$FCA_{SP} = FCA_{FF} + FCA_{FB}$$

<u>Régulation de l'alimentation en hydrogène :</u>

Feed-forward : valeur pour maintenir la concentration actuelle, basée sur l'inversion de la valeur stationnaire de l'équation suivante :

$$MHy_R = LAG\ (FHy_{IN} \cdot \tau_{Hy}\ ,\ \tau_{Hy}) \qquad (kg)$$

$$\Rightarrow FHy_{FF} = MHy_{RAW} / \tau_{Hy}$$

Feed-back : proportionnel à l'écart entre la consigne de rapport $HyEt_{SP}$, et le modèle.

$$FHy_{FB} = 5 \cdot (HyEt_{SP} \cdot MEt_R - MHy_R)$$

Consigne :

$$FHy_{SP} = FHy_{FF} + FHy_{FB}$$

<u>Régulation de l'alimentation en butène</u> (similaire à l'hydrogène) :

$$FBt_{FF} = MBt_{RAW} / \tau_{Bt}$$

$$FBt_{FB} = 5 \cdot (BtEt_{SP} \cdot MEt_R - MBt_R)$$

$$FBt_{SP} = FBt_{FF} + FBt_{FB}$$

Les équations qui précèdent résument les équations de l'algorithme esclave. Elles sont exécutées toutes les 10 secondes par le système numérique de contrôle et de commande (SNCC).

<u>L'algorithme maître</u>

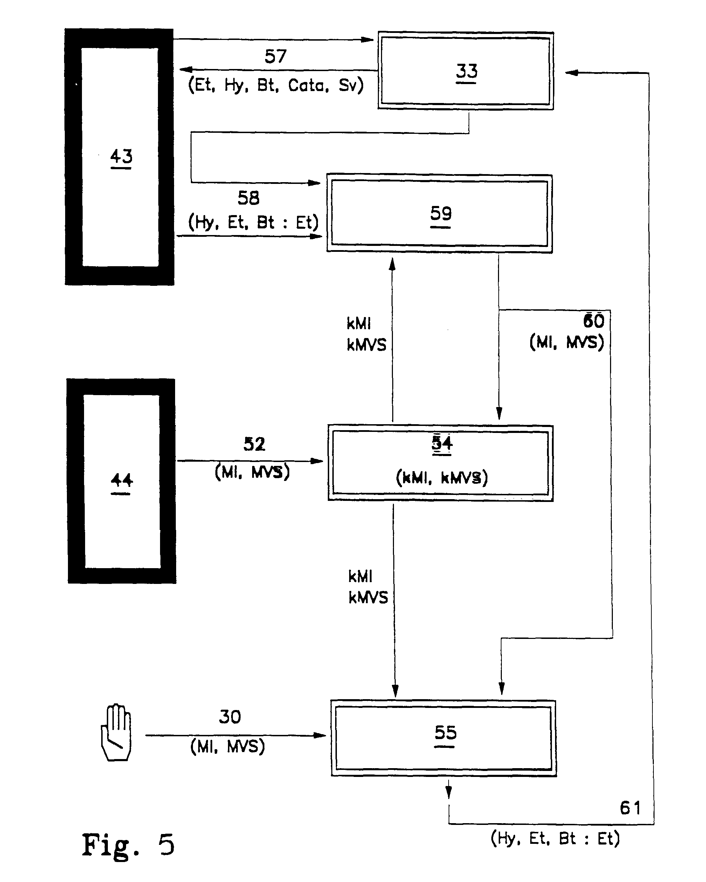

La Figure 5 illustre le principe de l'algorithme maître :

1. son organe de prédiction (basé sur un modèle direct) prédit les propriétés principales du polymère (MI et MVS); il utilise pour cela la mesure de la température de polymérisation, les prédictions pour les concentrations dans le réacteur, fournies par le modèle esclave, et les temps de séjour du PE dans les différents appareils ;
2. son organe d'adaptation compare les mesures de MI et de MVS effectuées (à la sortie du sécheur également), soit par le laboratoire de mesure toute les 2 h, soit par un analyseur en continu, aux valeurs prédites par le modèle direct, de façon à déterminer les 2 paramètres d'adaptation, qui sont des paramètres correctifs. multiplicatif pour le MI et additif pour la MVS ;
3. son organe de contrôle (basé sur un modèle inverse) calcule. à partir des consignes de MI et de MVS fournie par l'opérateur. les consignes pour les concentrations dans le réacteur (rapports Hy:Et et Bt:Et). Comme pour l'algorithme esclave, ce calcul est composé d'un feed-forward basé sur le modèle direct, et d'un feed-back proportionnel à l'écart entre le modèle direct et les consignes de l'opérateur.

Pour un catalyseur donné, les propriétés des résines en régime stable sont des fonctions de la température de polymérisation et des concentrations des réactifs. Parmi les différentes équations statiques renseignées dans la littérature. on a choisi les équations suivantes :

$$\log(MI) = a_0 + a_1 \cdot T° + a_2 \cdot \log\ (Hy/Et) + a_3 \cdot Bt/Et$$

$$MVS = b_0 + b_1 \cdot T° + b_2 \cdot (Bt/Et)^{b3} + b_4 \cdot \log(MI)$$

Les paramètres $a_0$ à $a_3$ et $b_0$ à $b_4$ sont obtenus par identification en régime stable, pour plusieurs résines fabriquées avec le même catalyseur.

Par ailleurs, les différents appareils rencontrés par le polyéthylène jusqu'au moment où ses propriétés sont mesurées (réacteur, stripper, centrifugeuse puis sécheur), peuvent tous être assimilés en première approximation à des réacteurs parfaitement mélangés.

L'algorithme maître utilise comme entrées les mesures suivantes :

$T_R$ = température au réacteur      (°C)
Vstp = volume liquide dans le stripper (obtenu par mesure de niveau) ($m^3$)
$MI_{MES}$ = mesure de MI (melt-index)
$MVS_{MES}$ = mesure de MVS (Masse Volumique Spécifique)

ainsi que les calculs suivants réalisés par l'algorithme esclave :

FpEt = production instantanée de polymère (allure de marche)      (kg/h)
$FPE_{OUT}$ = débit de PE sortant du réacteur      (kg/h)
$MPE_R$ = masse de PE dans le réacteur      (kg)
$HyEt_R$ = rapport Hy sur Et dans le réacteur      (kg/kg)
$BtEt_R$ = rapport Bt sur Et dans le réacteur      (kg/kg)

Les valeurs instantanées brutes (avant adaptation) de la MVS et du logarithme du MI ("1MI") sont calculées par :

$$MVS_{INS} = b_0 + b_1 \cdot T_R + b_2 \cdot (BtEt_R)^{b3} + b_4 \cdot 1MI_{INS}$$

$$1MI_{INS} = a_0 + a_1 \cdot T_R + a_2 \cdot \log (HyEt_R) + a_3 \cdot BtEt_R$$

En utilisant le théorème 2, on calcule les propriétés moyennes brutes à la sortie du réacteur :

$$1MIr = LAG (1MI_{INS}, MPE_R / FpEt)$$

$$MVSr = LAG (MVS_{INS}, MPE_R / FpEt)$$

En effet :

- les propriétés 1MI et MVS répondent assez bien à une loi de mélanges linéaire
- le réacteur boucle peut être assimilé à un réacteur parfaitement mélangé
- le débit massique de PE "entrant" (apparaissant) dans le réacteur est effectivement FpEt, la quantité de PE qui polymérise à chaque instant (allure de marche).

Propriétés brutes à la mesure : Sachant qu'on a dans le stripper environ 500 kg de PE par $m^3$, et si l'on prend l'hypothèse que le stripper est un réacteur parfaitement mélangé, on calcule les propriétés brutes en sortie du stripper comme suit :

$$1MIstp = LAG (1MIr, 500 \cdot Vstp / FPE_{OUT})$$

$$MVSstp = LAG (MVSr, 500 \cdot Vstp / FPE_{OUT})$$

Le temps de séjour dans la centrifugeuse étant très court, on peut l'ignorer.

Le sécheur est à lit fluide; il contient en permanence environ 1 400 kg de PE. On peut faire l'hypothèse que le niveau dans le stripper change peu, et que le débit qui en sort égale celui qui y rentre. Dès lors, le débit de PE entrant dans le sécheur vaut $FPE_{OUT}$. On a alors en sortie du sécheur, à l'endroit où l'échantillon est prélevé pour la mesure de propriété, les valeurs brutes suivantes :

$$1MIsh = LAG (1MIstp, 1400 / FPE_{OUT})$$

$$MVSsh = LAG (MVSstp, 1400 / FPE_{OUT})$$

Les propriétés après adaptation sont obtenues en faisant intervenir les paramètres d'adaptation kMI (paramètre multiplicatif) et kMVS (paramètre additif; les propriétés après adaptation sortie réacteur, stripper et sécheur valent donc :

$$MIr_C = kMI . 10^{1MIr}$$

$$MVSr_C = kMVS + MVSr$$

$$MIstp_C = kMI . 10^{1MIstp}$$

$$MVSstp_C = kMVS + MVSstp$$

$$MIsh_C = kMI . 10^{1MIsh}$$

$$MVSsh_C = kMVS + MVSsh$$

Adaptation de l'algorithme maître :

Les mesures de propriétés prennent un certain temps à être réalisées ($\pm$ 5 min. si analyseur en ligne, $\pm$ 1 h si effectuées par le laboratoire). Pour pouvoir calculer les paramètres d'adaptation, il faut donc resynchroniser (recaler dans le temps) les prédictions brutes du modèle avec les mesures. Cela peut par exemple se faire au moyen d'un registre à décalage (appelé ici "fonction DELAY") :

$$1MI_{DEL} = DELAY (1MIsh, \tau_{MI})$$

$$MVS_{DEL} = DELAY (MVSsh, \tau_{MVS})$$

avec : $\tau_{MI}$ et $\tau_{MVS} = \pm$ 5 min. ou $\pm$ 1 h. suivant que la mesure est réalisée par un analyseur continu ou par le laboratoire.
A chaque nouvelle mesure de MI ou de MVS, on recalcule le paramètre d'adaptation brut kMI' ou kMVS', en comparant la valeur modèle brute resynchronisée à la valeur mesurée :

$$kMI' = log (MI_{MES}) - 1MI_{DEL}$$

$$kMVS' = MVS_{MES} - MVS_{DEL}$$

Ces valeurs brutes sont filtrées afin d'atténuer les réactions précipitées que les perturbations (bruit) éventuelles des mesures infligeraient au procédé :

$$kMI = LAG ( kMI', \pm 1 h)$$

EP 0 830 394 B1

$$kMVS = LAG\ (\ kMVS',\ \pm\ 1h)$$

<u>Organe de contrôle</u> :

L'organe de contrôle a pour consignes les valeur $MI_{SP}$ et $MVS_{SP}$, entrées par l'opérateur. Il calcule les consignes pour les rapports des concentrations dans le réacteur $HyEt_{SP}$ et $BtEt_{SP}$ nécessaire pour obtenir rapidement les propriétés voulues $MI_{SP}$ et $MVS_{SP}$. Ce calcul se fait en 2 étapes :

1. l'organe de contrôle calcule, à partir des consignes $MI_{SP}$ et $MVS_{SP}$ fournies par l'opérateur, et des valeurs après adaptation du MI et de la MVS dans les différents appareils, les consignes $MIi_{SP}$ et $MVSi_{SP}$ pour la production instantanée. Ces consignes instantanées sont composées d'un feed-forward, et d'un feed-back proportionnel à l'écart entre le modèle direct et les consignes de l'opérateur.
2. les consignes pour les rapports de concentration $HyEt_{SP}$ et $BtEt_{SP}$ sont alors calculées en inversant l'équation statique utilisée plus haut pour le calcul de la valeur instantanée du MI et de la MVS.

Consignes pour les propriétés instantanées : On compare les propriétés sortie sécheur aux consignes de propriétés, pour déterminer les consignes voulues pour les propriétés à la sortie du stripper (on néglige la centrifugeuse) :

$$MIstp_{SP} = 10^{\,(log(MISP)\,+\,0.1\,.\,(log(MISP)\,-\,log(MIshC)))}$$

$$MVSstp_{SP} = MVS_{SP} + 0.1\,.\,(MVS_{SP} - MVSsh_C)$$

De même, à partir de l'écart entre ces consignes sortie stripper et des valeurs calibrées au stripper, on calcule les consignes voulues en sortie du réacteur :

$$MIr_{SP} = 10^{\,(log(MIstpSP)\,+\,0.5\,.\,(log(MIstpSP)\,-\,log(MIstpC)))}$$

$$MVSr_{SP} = MVSstp_{SP} + 0.5\,.\,(MVSstp_{SP} - MVSstp_C)$$

Enfin, à partir de l'écart entre ces consignes sortie réacteur et des valeurs calibrées correspondantes, on calcule les consignes voulues pour la production instantanée :

$$MIi_{SP} = 10^{\,(log(MIrSP)\,+\,2\,.\,(log(MIrSP)\,-\,log(MIrC)))}$$

$$MVSi_{SP} = MVSr_{SP} + 2\,.\,(MVSr_{SP} - MVSr_C)$$

Consignes pour les rapports de concentrations : Les consignes pour les rapports de concentration $HyEt_{SP}$ et $BtEt_{SP}$ s'obtiennent en inversant l'équation statique utilisée plus haut pour le calcul de la valeur instantanée du MI et de la MVS, en substituant aux termes MI et MVS les consignes voulues pour la production instantanée et en appliquant le paramètre d'adaptation.
Partant de :

$$log\ (MIi_{SP}\ /\ kMI) = a_0 + a_1\,.\,T_R + a_2\,.\,log\ (HyEt_{SP}) + a_3\,.\,BtEt_R$$

$$MVSi_{SP} - kMVS = b_0 + b_1\,.\,T_R + b_2\,.\,(BtEt_{SP})^{b3} + b_4\,.\,1MI_{INS}$$

on obtient :

$$a_2 \cdot \log (HyEt_{SP}) = \log (Mli_{SP} / kMl) - (a_0 + a_1 \cdot T_R + a_3 \cdot BtEt_R)$$

ce qui donne :

$$HyEt_{SP} = 10^{((\log (MliSP / kMl) - a0 - a1 \cdot TR - a3 \cdot BtEtR) / a2)}$$

et :

$$b_2 \cdot (BtEt_{SP})^{b3} = MVSi_{SP} - kMVS - (b_0 + b_1 \cdot T_R + b_4 \cdot 1Ml_{INS})$$

ce qui donne :

$$BtEt_{SP} = ((MVSi_{SP} - kMVS - b_0 - b_1 \cdot T_R - b_4 \cdot 1Ml_{INS}) / b_2)^{1/b3}$$

Les équations qui précèdent résument les équations de l'algorithme maître. Elles sont exécutées toutes les 30 secondes par le SNCC.

Avec ce procédé, il est possible de piloter la polymérisation avec une grande précision. En particulier :

- les propriétés contrôlées (MI et MVS) sont maintenues au plus près des valeurs voulues, avec une dispersion minime
- les changements de qualité (et donc des propriétés MI et MVS) sont réalisés avec rapidité et précision
- les démarrages et arrêts de la polymérisation. ainsi que les changements d'allure de marche du procédé, sont réalisés d'une façon accélérée, tout en maintenant le MI et la MVS fort proches des valeurs voulues.

Bien que la méthode de régulation selon l'invention ait été présentée à l'aide d'un procédé de synthèse de polyéthylène par polymérisation en continu d'éthylène, il est entendu que cette méthode de régulation sera de façon générale efficace pour d'autres procédés de synthèse. et en particulier pour les procédés présentant l'une ou plusieurs des caractéristiques suivantes :

- une régulation multivariable est nécessaire parce que plusieurs variables influent sur l'ensemble des propriétés à régler;
- la dynamique du processus est lente : mélanges en série, temps morts importants;
- les mesures des propriétés sont échantillonnées avec une faible fréquence, et/ou bruitées;
- la régulation doit être dynamique, c'est-à-dire valable quelle que soit l'allure de marche du procédé, ainsi que durant les transitions d'allure de marche et de qualité (propriétés) du produit à synthétiser;
- il est intéressant d'estimer certaines variables non directement mesurées.

Pour pouvoir être facilement mise en oeuvre avec les techniques présentées, il suffit que :

- les équations statiques du processus soient connues (souvent, elles le sont au moins dans une certaine mesure, sinon le procédé ne pourrait être maîtrisé) ;
- la dynamique du processus puisse être approchée par des mélanges parfaits et des temps morts;
- les mesures nécessaires soient disponibles et d'une qualité suffisante (en particulier, les débits des réactifs et les débits traversant les réservoirs concernés).

L'utilisation particulière de la fonction LAG décrite ci-dessus, notamment dans les théorèmes 1 et 2, peut naturellement être étendue à des méthodes de régulation basées sur une structure autre que celle qui a été exposée, qui comprend un algorithme maître et un algorithme esclave distincts. Elle peut par exemple être appliquée dans une méthode de régulation ne comportant qu'un algorithme unique.

Exemples :

8 essais de synthèse de polyéthylène (PE) de 4 types différents (définis par leur MI, MVS, ...) ont été réalisés, respectivement en utilisant une méthode de régulation classique et en utilisant la méthode de l'invention. Le tableau ci-dessous résume les constatations qui ont été faites sur la base de nombreuses mesures de l'indice de fluidité en fondu (melt index) des 8 polymères obtenus. Cpk désigne l'indice de capabilité centré du procédé.

| Type de PE | Régulation classique | | Régulation selon l'invention | |
|---|---|---|---|---|
| | Ecart-type | Cpk | Ecart-type | Cpk |
| 1 | 0.127 | 0.909 | 0.059 | 2.202 |
| 2 | - | 0.61 | - | 2.0 |
| 3 | - | 0.48 | - | 1.88 |
| 4 | - | 0.64 | - | 1.09 |

On constate que l'indice de capabilité Cpk est plus que doublé grâce à l'utilisation de la méthode de l'invention. ce qui indique que les propriétés sont environ deux fois moins dispersées et/ou mieux centrées par rapport aux consignes imposées.

| Tableau des abréviations utilisées | |
|---|---|
| $a_I$ | paramètres pour l'équation statique du MI (I = 0 à 3) |
| $b_I$ | paramètres pour l'équation statique de la MVS (I = 0 à 4) |
| $A_{Et}$ | activité catalytique pour l'éthylène $(m^3.kg^{-1}.h^{-1})$ |
| $cx_{GC}$ | concentration de "x" obtenue par la mesure de l'analyseur $(kg/m^3)$ |
| $cx_R$ | concentration de "x" dans le réacteur $(kg/m^3)$ |
| $cx_{SP}$ | consigne pour la concentration de "x" dans le réacteur $(kg/m^3)$ |
| Fpx | débit massique de polymérisation de "x" (allure de marche) $(kg/h)$ |
| $FV_{OUT}$ | débit volumique sortant du réacteur $(m^3/h)$ |
| $Fx_{IN}$ | débit massique de "x" entrant $(kg/h)$ |
| $Fx_{OUT}$ | débit massique de "x" sortant $(kg/h)$ |
| kd | constante de désactivation du catalyseur $(1/h)$ |
| KfBt | paramètre correctif (d'adaptation) pour le butène |
| KfHy | paramètre correctif (d'adaptation) pour l'hydrogène |
| kMI | paramètre correctif (d'adaptation) pour le MI |
| kMVS | paramètre correctif (d'adaptation) pour la MVS |
| LAG ( , ) | fonction filtre passe-bas du 1er ordre |
| $MI_{MES}$ | mesure du MI (Melt Index) (indice de fluidité en fondu) |
| MIy | MI (Melt Index) brut (non calibré) dans "y" |
| $MIy_C$ | MI calibré (avec adaptation) dans "y" |
| $MIy_{SP}$ | consigne de MI (calibrée) pour "y" |
| $MVS_{MES}$ | mesure de la MVS (Masse Volumique Standard) |
| MVSy | MVS (Masse Volumique Standard) brute (non calibré) dans "y" |
| $MVSy_C$ | MVS calibrée (avec adaptation) dans "y" |
| $MVSy_{SP}$ | consigne de MVS (calibrée) pour "y" |
| $Mx_{RAW}$ | masse de "x" brute (non calibré) dans le réacteur $(kg)$ |
| $Mx_Y$ | masse de "x" calibrée (avec adaptation) dans "y" $(kg)$ |
| $R_X$ | réactivité de X dans le réacteur |
| $V_Y$ | Volume de "y" $(m^3)$ |
| $\tau_R$ | temps de séjour dans le réacteur $(h)$ |
| $\tau_X$ | temps de séjour pour "x" dans le réacteur $(h)$ |
| "x" peut représenter les constituants suivants : | |
| Bt | Butène |
| CA | Catalyseur |
| Et | Ethylène |
| Hy | Hydrogène |

(suite)

| Tableau des abréviations utilisées | |
|---|---|
| Sv | Solvant |
| "y" peut représenter les appareils suivants : | |
| r | Réacteur de polymérisation |
| stp | Stripper |
| sh | Sécheur (à lit fluide) |

Legende des figures

10 réacteur de polymérisation
11 alimentation en réactifs (matières premières), catalyseur. solvant
12 circuit de refroidissement
14 conduite de soutirage
16 stripper
18 condenseur
20 chromatographe en phase gazeuse
22 centrifugeuse
24 sécheur à lit fluide
25 solvant et réactifs à recycler
26 polyéthylène
27 réactifs à recycler
28 solvant à recycler
30 consignes de propriété du polymère
31 consigne d'allure de marche du procédé
32 algorithme maître
33 algorithme esclave
34 consignes de concentration
35 consignes de débits entrants
36 régulation (PID) des débits
37 mesures
38 régulation de température
39 feed-forward de température
40 dynamique de la polymérisation : cinétique chimique et bilan matière
41 simulations de l'allure de marche et des rapports Hy/Et et Bt/Et
42 mesures de température. de débits et de concentrations
43 procédé régulé
44 analyse d'un échantillon du produit synthétisé par le procédé
51 mesure de grandeurs liées au déroulement du procédé
52 mesure de propriétés du polymère
53 modèle direct : prédiction des propriétés à la mesure
54 comparaison : correction du modèle (adaptation)
55 algorithme de régulation. basé sur le modèle inverse (feed-forward + feed-back)
56 consignes pour les grandeurs liées au procédé
57 mesures et consignes de débits entrants
58 mesure de la température et prédiction des concentrations
59 modèle direct : équations des propriétés en fonction des concentrtations
60 prédiction des propriétés
61 consignes pour les concentrations dans le réacteur
62 mesure des débits entrants
63 mesure des concentrations dans le réacteur
64 modèle direct ; prédiction des concentrations sur base du bilan matière
65 prédictions de concentration

66    comparaison ; calcul des paramètres d'adaptation

**Revendications**

1.  Méthode de régulation d'un procédé de synthèse d'au moins un produit chimique dans un appareillage comprenant au moins un réacteur (R) pouvant être assimilé à un réacteur parfaitement mélangé, dans laquelle une ou plusieurs grandeurs de commande (GC) permettent d'agir sur le déroulement du procédé en vue qu'une ou plusieurs grandeurs liées aux propriétés du produit et/ou au déroulement du procédé, appelées grandeurs réglées (GR), soient égales à des consignes corespondantes ($C_{GR}$), ladite méthode comprenant les étapes suivantes :

    (a) entrée de consignes concernant les grandeurs réglées ($C_{GR}$) ;
    (b) calcul, au moyen d'un organe de prédiction (OP). de prédictions des grandeurs réglées ($P_{GR}$), sur la base de mesures des grandeurs de commande du procédé ($M_{GC}$) ;
    (c) utilisation d'un organe de contrôle (OC) pour calculer des consignes des grandeurs de commande du procédé ($C_{GC}$), sur base des consignes ($C_{GR}$) et des prédictions ($P_{GR}$) des grandeurs réglées ;
    (d) transmission des consignes des grandeurs de commande du procédé ($C_{GC}$) à des actionneurs, ou à des organes de réglage contrôlant des actionneurs, afin d'agir sur le déroulement du procédé ;

    dans laquelle l'organe de prédiction (OP) est basé sur un modèle mathématique du procédé, appelé modèle direct (M), caractérisé en ce que l'organe de prédiction (OP) est conçu de telle manière qu'on prédit la masse $M_{XR}$ d'au moins un constituant (X) dans le réacteur (R) par l'équation :

    $$M_{XR} = LAG\,(F_{XRin} \cdot \tau_X \,,\, \tau_X\,)$$

    dans laquelle :

    - $F_{XRin}$ est le débit massique du constituant X entrant dans le réacteur R ;
    - $\tau_X$ est le temps de séjour de x dans le réacteur, qui vaut

    $$\tau_X = M_{XR} / (\Sigma\; Fxdis)$$

    dans lequel :

    - $M_{XR}$ désigne la dernière valeur calculée de la masse du constituant X présente dans le réacteur R ;
    - $\Sigma\,Fxdis$ désigne la somme de tous les débits massiques Fxdis avec lesquels le constituant X disparaît du réacteur R, notamment par réaction et/ou par sortie du réacteur ;

    - la fonction y = LAG (u , $\tau$) est la solution de l'équation différentielle

    $$u = \tau \cdot \frac{dy}{dt} + y$$

    calculée avec la valeur instantanée de u et de $\tau$, ainsi qu'avec la dernière valeur de y calculée.

2.  Méthode de régulation selon la revendication 1, dans laquelle la consigne d'au moins une grandeur réglée ($C_{GR}$) est corrigée sur la base de l'écart entre la mesure ($M_{GR}$) et la prédiction ($P_{GR}$) de cette grandeur réglée, de façon à ce que la régulation soit efficace même en présence d'une erreur dans la prédiction de cette grandeur réglée ($P_{GR}$).

3.  Méthode de régulation selon la revendication 1, dans laquelle le modèle (M) du procédé est périodiquement adapté sur la base de l'écart entre les prédictions ($P_{GR}$) et les mesures ($M_{GR}$) des grandeurs réglées. de façon à ce que le modèle du procédé fournisse des prédictions des grandeurs réglées ($P_{GR}$) aussi proches que possible des mesures de ces grandeurs ($M_{GR}$).

4.  Méthode de régulation selon la revendication 3, dans laquelle les mesures ($M_{GR}$) des grandeurs réglées interviennent uniquement dans l'adaptation éventuelle du modèle du procédé, et n'interviennent pas directement dans le calcul des consignes des grandeurs de commande du procédé ($C_{GC}$).

5. Méthode de régulation selon l'une des revendications 1 à 4, appliquée à un procédé de polymérisation, comprenant l'une ou plusieurs des étapes supplémentaires suivantes :

- calcul d'une consigne de température dans le réacteur en fonction d'une ou plusieurs consignes de propriétés du produit ; et transmission de cette consigne de température à un ou plusieurs actionneurs permettant de modifier la température dans le réacteur ;
- calcul d'un bilan thermique pour le réacteur, sur base notamment de mesures de température; utilisation de ce bilan thermique de façon à déterminer la quantité de polymère synthétisé par unité de temps et/ou la productivité du catalyseur et/ou la concentration d'au moins un réactif dans le réacteur ;
- calcul de la quantité de chaleur produite par la polymérisation. grâce à un calcul de la quantité du ou des réactifs qui polymérisent ; détermination par ce biais de la quantité la chaleur qu'il faut ajouter ou évacuer pour maintenir la température du réacteur ; utilisation du résultat dudit calcul pour améliorer la régulation de température, de façon à respecter au mieux la consigne de température, notamment en cas de modifications de l'allure de marche.

6. Méthode de régulation selon l'une des revendications précédentes, dans laquelle la propriété $Px_R$ d'un constituant "x" dans le réacteur R, assimilé à un réacteur parfaitement mélangé, est calculée comme suit :

$$Px_R = LAG \ (Px_{IN} \ , \ Mx_R \ / \ Fx_{IN})$$

où "Px" est une propriété d'un constituant "x", répondant de manière substantielle à la loi de mélange linéaire $Px_{1+2} = w_1 . Px_1 + w_2 . Px_2$ , $w_1$ et $w_2$ étant les proportions massiques de deux fractions 1 et 2 de propriété $Px_1$ et $Px_2$ que l'on mélange ;

$Px_{1+2}$ est la propriété de x à sa sortie du réacteur, après mélange ;
$Px_{IN}$ est la propriété du constituant "x" à son entrée dans le réacteur R ;
$Mx_R$ est la masse du constituant x dans le réacteur R ;
$Fx_{IN}$ est le débit massique du constituant x entrant dans le réacteur R.

7. Méthode de régulation selon l'une des revendications précédentes. comprenant les étapes suivantes :

- entrée de consignes relatives à une ou plusieurs propriétés du produit à synthétiser, dans un algorithme maître ;
- entrée de la consigne d'allure de marche du procédé, dans un algorithme esclave;
- calcul de consignes de concentration des constituants dans le réacteur à l'aide de l'algorithme maître, en fonction notamment des consignes et des mesures de propriétés du produit ainsi que de mesures ou de prédictions des concentrations des différents constituants dans le réacteur ;
- transmission des consignes de concentration calculées par l'algorithme maître comme grandeurs d'entrée à l'algorithme esclave;
- calcul des consignes de débit des constituants entrant dans le réacteur, à l'aide de l'algorithme esclave, en fonction notamment de la consigne d'allure de marche du procédé, des consignes de concentration, et de mesures de débit des constituants entrant dans le réacteur, et
- transmission des consignes de débit calculées à l'aide de l'algorithme esclave à un ou plusieurs actionneurs afin de régler les débits des constituants entrant dans le réacteur,

dans laquelle l'algorithme maître et/ou l'algorithme esclave sont mis en oeuvre conformément à l'une des revendications précédentes.

8. Méthode de régulation selon la revendication 7, caractérisée en ce que l'algorithme maître comprend :

- un organe de prédiction, basé sur un modèle direct du procédé permettant de fournir une prédiction des propriétés du produit synthétisé en fonction de mesures et/ou de prédictions des concentrations des constituants ;
- un organe d'adaptation comparant les prédictions de propriétés calculées par l'organe de prédiction à des valeurs effectivement mesurées sur le produit synthétisé et déduisant de cette comparaison des paramètres d'adaptation, lesdits paramètres d'adaptation intervenant comme grandeurs d'entrée supplémentaires dans ledit organe de prédiction de l'algorithme maître ; et

- un organe de contrôle, basé sur un modèle inverse du procédé, pour calculer, en fonction des consignes et des prédictions de propriétés du produit à synthétiser, des consignes de concentrations pour l'algorithme esclave, lesdits paramètres d'adaptation intervenant également comme grandeurs d'entrée supplémentaires dans ledit organe de contrôle.

9. Méthode de régulation selon l'une quelconque des revendications 7 ou 8. dans laquelle l'algorithme esclave comprend :

- un organe de prédiction, basé sur un modèle direct du procédé permettant de fournir une prédiction des concentrations d'un ou plusieurs des constituants sur base d'un bilan de matière dans le réacteur ;
- un organe d'adaptation, comparant les prédictions de concentrations calculées par le modèle direct à des mesures de concentration et déduisant de cette comparaison des paramètres d'adaptation, lesdits paramètres d'adaptation intervenant comme grandeurs d'entrée supplémentaires dans ledit organe de prédiction de l'algorithme esclave ; et
- un organe de contrôle, basé sur un modèle inverse du procédé, pour calculer, en fonction de la consigne d'allure de marche, des consignes de concentration calculées par l'organe de contrôle de l'algorithme maître et des prédictions de concentration calculées par l'organe de prédiction de l'algorithme esclave, les consignes pour les débits entrant dans le réacteur, lesdits paramètres d'adaptation intervenant comme grandeurs d'entrée supplémentaires dans ledit organe de contrôle de l'algorithme esclave.

10. Méthode de régulation selon l'une des revendications précédentes, appliquée à la régulation de la synthèse en continu de polyéthylène par polymérisation d'éthylène dans au moins un réacteur, les réactifs comprenant l'éthylène, l'hydrogène et/ou un comonomère optionnel, la réaction de polymérisation ayant lieu en présence d'un catalyseur et une partie du contenu du réacteur étant prélevé en permanence ou par intermittence.

11. Méthode de régulation selon les revendications 9 et 10, dans laquelle l'organe d'adaptation de l'algorithme esclave compare les mesures des concentrations en éthylène (Et), hydrogène (Hy) et/ou comonomère optionnel (Bt) aux valeurs prédites par l'organe de prédiction de l'algorithme esclave, de façon à déterminer au moins l'un des paramètres d'adaptation suivants :

a) l'activité spécifique du catalyseur pour l'éthylène "AEt", en kg/h de polyéthylène par kg de catalyseur et par kg/$m^3$ d'éthylène ;
b) l'erreur de gain sur la mesure de débit d'hydrogène "KfHy";
c) la pureté de l'alimentation en comonomère "KfBt".

12. Méthode de régulation selon l'une des revendications 1 à 9, appliquée à la régulation de la synthèse en continu de polypropylène par polymérisation de propylène dans au moins un réacteur, les réactifs comprenant le propylène, l'hydrogène et/ou un comonomère optionnel, la réaction de polymérisation ayant lieu en présence d'un catalyseur et une partie du contenu du réacteur étant prélevé en permanence ou par intermittence.

13. Méthode de régulation selon les revendications 9 et 12, dans laquelle l'organe d'adaptation de l'algorithme esclave compare les mesures des concentrations en propylène (Pe), hydrogène (Hy) et/ou comonomère optionnel (Et) aux valeurs prédites par l'organe de prédiction de l'algorithme esclave. de façon à déterminer au moins l'un des paramètres d'adaptation suivants :

a) l'activité spécifique du catalyseur pour le propylène "APe", en kg/h de polypropylène par kg de catalyseur et par kg/$m^3$ de propylène ;
b) l'erreur de gain sur la mesure de débit d'hydrogène "KfHy";
c) la pureté de l'alimentation en comonomère "KfEt".

14. Méthode de régulation selon la revendication 8, appliquée à un procédé de polymérisation, dans laquelle :

- on mesure périodiquement l'indice de fluidité en fondu (MI) et/ou la masse volumique standard (MVS) du polymère et/ou sa teneur en comonomère;
- l'organe de prédiction de l'algorithme maître calcule des prédictions brutes de MI et MVS en fonction de la température au réacteur, des concentrations dans le réacteur et des temps de séjour dans les différents appareils du circuit de polymérisation ;
- périodiquement, l'organe d'adaptation de l'algorithme maître :

  - resynchronise les prédictions brutes de MI et MVS, en tenant compte du temps écoulé entre la prise des mesures de MI et MVS et l'obtention du résultat des mesures, et compare les prédictions brutes de MI et MVS resynchronisées aux mesures de MI et MVS,
  - calcule un paramètre d'adaptation multiplicatif kMI appliqué à la prédiction brute du MI pour obtenir une prédiction calibrée du MI. et
  - calcule un paramètre d'adaptation additif kMVS appliqué à la prédiction brute de MVS pour obtenir une prédiction calibrée de MVS.

15. Méthode de régulation selon l'une des revendications précédentes, appliquée à un procédé de polymérisation. dans laquelle on évalue une ou plusieurs propriétés du polymère en utilisant une technique choisie parmi la spectroscopie infrarouge proche (NIR), la spectroscopie infrarouge à transformée de Fourier (FTIR) et la résonance magnétique nucléaire (NMR).

16. Méthode de régulation selon l'une des revendications précédentes, appliquée à un procédé de polymérisation, dans laquelle on évalue une ou plusieurs propriétés du polymère en appliquant une relation de corrélation préétablie aux résultats de mesures réalisées par spectroscopie infrarouge proche (NIR) à plusieurs longueurs d'onde prédéterminées en fonction de la nature du polymère, choisies entre 0,8 et 2,6 $\mu$m.

17. Procédé de synthèse d'un produit chimique dans un appareillage comprenant au moins un réacteur pouvant être assimilé à un réacteur parfaitement mélangé, régulé au moyen de la méthode de régulation selon l'une des revendications précédentes.

18. Dispositif de régulation d'un procédé de synthèse d'un produit chimique dans un appareillage de synthèse comprenant :

  - au moins un réacteur pouvant être assimilé à un réacteur parfaitement mélangé;
  - au moins un moyen pour entrer une consigne de propriété (CGR) du produit à synthétiser dans l'unité de calcul;
  - au moins un moyen pour entrer une consigne d'allure de marche du produit à synthétiser (CGC) dans l'unité de calcul;
  - au moins un organe de contrôle (OC);
  - au moins un organe de prédiction (OP);
  - au moins un moyen pour imposer une consigne d'une grandeur de commande (CGC) à un actionneur adéquat;

dans lequel la méthode de régulation est conforme à l'une des revendications 1 à 16.

**Patentansprüche**

1. Verfahren zur Regelung eines Prozesses zur Synthese wenigstens eines chemischen Produkts in einer Apparatur, die wenigstens einen Reaktor (R) umfaßt, der mit einem ideal durchmischten Reaktor gleichgestellt werden kann, bei dem eine oder mehrere Steuerungsgrößen (GC), die es ermöglichen, auf den Ablauf des Prozesses im Hinblick darauf einzuwirken, daß eine oder mehrere Größen, die mit den Eigenschaften des Produkts und/oder mit dem Ablauf des Prozesses verbunden sind, Regelgrößen (GR) genannt, gleich den entsprechenden Sollwerten ($C_{GR}$) sind, wobei besagtes Verfahren die folgenden Schritte umfaßt:

  (a) Eingabe von Sollwerten, die die Regelgrößen ($C_{GR}$) betreffen;
  (b) Berechnung mittels eines Voraussageprogramms (OP) von Voraussagen für die Regelgrößen ($P_{GR}$) auf der Basis von Messungen der Steuerungsgrößen des Prozesses ($M_{GC}$);
  (c) Verwendung eines Kontrollprogramms (OC), um Sollwerte der Steuerungsgrößen des Prozesses ($C_{GC}$) auf der Basis der Sollwerte ($C_{GR}$) und der Voraussagen ($P_{GR}$) der Regelgrößen zu berechnen;
  (d) Übertragung der Sollwerte der Steuerungsgrößen des Prozesses ($C_{GC}$) auf Wirkglieder oder auf Regelorgane, die die Wirkglieder kontrollieren, um auf den Ablauf des Prozesses einzuwirken;

bei dem das Voraussageprogramm (OP) auf einem mathematischen Modell des Prozesses, direktes Modell (M) genannt, basiert, dadurch gekennzeichnet, daß das Voraussageprogramm (OP) so konzipiert ist, daß man die Masse $M_{XR}$ von wenigstens einem Bestandteil (X) in dem Reaktor (R) voraussagt durch die Gleichung:

$$M_{XR} = LAG (F_{XRin} \cdot \tau_X \cdot \tau_X)$$

in der

- $F_{XRin}$ der Massendurchsatz des Bestandteils X, der in den Reaktor R eintritt, ist;
- $\tau_X$ die Verweilzeit von x im Reaktor ist, für die gilt

$$\tau_X = M_{XR} / (\Sigma \; Fxdis)$$

worin

- $M_{XR}$ den letzten berechneten Wert der Masse des Bestandteils X, die in dem Reaktor R vorhanden ist, bezeichnet;
- Fxdis die Summe aller Massendurchsätze Fxdis bezeichnet, mit denen der Bestandteil X aus dem Reaktor R verschwindet, insbesondere durch Reaktion und/oder durch Austritt aus dem Reaktor;

- die Funktion $Y = LAG (u, \tau)$ die Lösung der Differentialgleichung

$$u = \tau \cdot dy/dt + y$$

ist, die mit dem momentanen Wert von u und $\tau$ sowie mit dem letzten berechneten Wert von y berechnet wird.

2. Verfahren zur Regelung gemäß Anspruch 1, bei dem der Sollwert wenigstens einer Regelgröße ($C_{GR}$) auf der Basis der Abweichung zwischen der Messung ($M_{GR}$) und der Voraussage ($P_{GR}$) für diese Regelgröße so korrigiert wird, daß die Regelung selbst bei Vorhandensein eines Fehlers bei der Voraussage dieser Regelgröße ($P_{GR}$) wirksam ist.

3. Verfahren zur Regelung gemäß Anspruch 1, bei dem das Modell (M) des Prozesses auf der Basis der Abweichung zwischen den Voraussagen ($P_{GR}$) und den Messungen ($M_{GR}$) der Regelgrößen periodisch angepaßt wird, so daß das Modell des Prozesses Voraussagen der Regelgrößen ($P_{GR}$) liefert, die den Messungen dieser Größen ($M_{GR}$) so nahe wie möglich sind.

4. Verfahren zur Regelung gemäß Anspruch 3, bei dem die Messungen ($M_{GR}$) der Regelgrößen nur in die eventuelle Anpassung des Modells des Prozesses eingehen und nicht direkt in die Berechnung der Sollwerte der Steuerungsgrößen des Prozesses ($C_{GC}$) eingehen.

5. Verfahren zur Regelung gemäß einem der Ansprüche 1 bis 4, angewendet auf einen Polymerisationsprozeß, das einen oder mehrere der folgenden zusätzlichen Schritte umfaßt:

- Berechnung eines Temperatursollwerts in dem Reaktor in Abhängigkeit von einem oder mehreren Sollwerten von Eigenschaften des Produkts; und Übertragung dieses Temperatursollwerts auf eine oder mehrere Wirkglieder, die es ermoglichen, die Temperatur in dem Reaktor zu verändern;
- Berechnung einer Wärmebilanz für den Reaktor insbesondere auf des Basis von Temperaturmessungen; Verwendung dieser Wärmbilanz, um die Menge an synthetisiertem Polymer pro Zeitenheit und/oder die Produktivität des Katalysators und/oder die Konzentration wenigstens eines Reaktanten in dem Reaktor zu bestimmen;
- Berechnung der durch die Polymerisation erzeugten Wärmemenge durch eine Berechnung der Menge des oder der Reaktanten, die polymerisieren; über diesen Umweg Bestimmung der Wärmemenge, die man zu- oder abführen muß, um die Temperatur des Reaktors aufrechtzuerhalten; Werwendung des Ergebnisses besagter Berechnung, um die Temperaturregelung zu verbessern, so daß der Temperatursollwert am besten eingehalten wird, insbesondere im Fall von Veränderungen der Durchsatzgeschwindigkeit.

6. Verfahren zur Regelung gemäß einem der vorhergehenden Ansprüche, bei dem die Eigenschaft $Px_R$ eines Bestandteils "x" in dem Reaktor R, der einem ideal durchmischten Reaktor gleichgestellt, wie folgt berechnet wird:

$$Px_R = LAG(Px_{IN}, Mx_R/Fx_{IN})$$

worin "Px" eine Eigenschaft eines Bestandteils "x" ist, die im wesentlichen dem linearen Mischungsgesetz $Px_{1+2} = w_1.Px_1 + w_2.Px_2$ gehorcht, wobei $w_1$ und $w_2$ die Massenanteile von zwei Fraktionen 1 und 2 der Eigenschaft $Px_1$ und $Px_2$, die man mischt, sind;

$Px_{1+2}$ die Eigenschaft von x bei seinem Austritt aus dem Reaktor nach Mischen ist;
$Px_{IN}$ die Eigenschaft des Bestandteils "x" bei seinem Eintritt in den Reaktor R ist;
$Mx_R$ die Masse des Bestandteils x in dem Reaktor R ist;
$Fx_{IN}$ der Massendurchsatz des Bestandteils x, der in den Reaktor R eintritt, ist.

7. Verfahren zur Regelung gemäß einem der vorhegehenden Ansprüche, das die folgenden Schritte umfaßt:

- Eingabe von Sollwerten bezüglich einer oder mehrerer Eigenschaften des zu synthetisierenden Produkts in einen Hauptalgorithmus;
- Eingabe des Sollwerts der Durchsatzgeschwindigkeit des Prozesses in einen Nebenalgorithmus;
- Berechnung von Sollwerten der Konzentration der Bestandteile in dem Reaktor mit Hilfe des Hauptalgorithmus insbesondere in Abhängigkeit von den Sollwerten und den Messungen von Eigenschaften des Produkts sowie von Messungen oder Voraussagen der Konzentrationen der verschiedenen Bestandteile in dem Reaktor;
- Übertragung der Konzentrationssollwerte, die durch den Hauptalgorithmus berechnet wurden, in den Nebenalgorithmus als Eingangsgrößen;
- Berechnung der Sollwerte des Durchsatzes der Bestandteile, die in den Reaktor eintreten, mit Hilfe des Nebenalgorithmus insbesondere in Anhängigkeit vom Sollwert der Durchsatzgeschwindigkeit des Prozesses, von den Konzentrations-sollwerten und den Messungen des Durchsatzes der Bestandteile, die in den Reaktor eintreten; und
- Übertragung der Durchsatzsollwerte, die mit Hilfe des Nebenalgorithmus berechnet wurden, auf ein oder mehrere Wirkglieder, um die Durchsätze der Bestandteile, die in den Reaktor eintreten, zu regeln;

bei dem der Hauptalgorithmus und/oder der Nebenalgorithmus gemäß einem der vorhergehenden Ansprüche verwendet werden.

8. Verfahren zur Regelung gemäß Anspruch 7, dadurch gekennzeichnet, daß der Hauptalgorithmus umfaßt:

- ein Voraussageprogramm, das auf einem direkten Modell des Prozesses basiert, das es ermöglicht, eine Voraussage für die Eigenschaften des synthetisierten Produkts in Abhängigkeit von Messungen und/oder von Voraussagen der Konzentrationen der Bestandteile zu liefern;
- ein Anpassungsprogramm, das die von dem Voraussageprogramm berechneten Voraussagen von Eigenschaften mit tatsächlich an dem synthetisierten Produkt gemessenen Werten vergleicht und aus diesem Vergleich Anpassungsparameter ableitet, wobei besagte Anpassungsparameter als zusätzliche Eingangsgrößen in besagtes Voraussageprogramm des Hauptalgorithmus eingehen; und
- ein Kontrollprogramm, das auf einem inversen Modell des Prozesses basiert, um in Abhängigkeit von den Sollwerten und den Voraussagen von Eigenschaften des zu synthetisierenden Produkts Konzentrationssollwerte für den Nebenalgorithmus zu berechnen, wobei besagte Anpassungsparameter ebenfalls als zusätzliche Eingangsgrößen in besagtes Kontrollprogramm eingehen.

9. Verfahren zur Regelung gemäß einem der Ansprüche 7 oder 8, bei dem der Nebenalgorithmus umfaßt:

- ein Voraussageprogramm, das auf einem direkten Modell des Prozesses basiert, das es ermöglicht, eine Voraussage der Konzentrationen eines oder mehrerer Bestandteile auf der Basis einer Stoffbilanz in dem Reaktor zu liefern;
- ein Anpassungsprogramm, das die durch das direkte Modell berechneten Voraussagen von Konzentrationen mit Konzentrationsmessungen vergleicht und aus diesem Vergleich Anpassungsparameter ableitet, wobei besagte Anpassungsparameter als zusätzliche Eingangsgrößen in besagtes Voraussageprogramm des Nebenalgorithmus eingehen; und
- ein Kontrollprogramm, das auf einem inversen Modell des Prozesses basiert, um in Abhängigkeit von dem Sollwert der Durchsatzgeschwindigkeit, den Konzentrationssollwerten, die durch das Kontrollprogramm des Hauptalgorithmus berechnet wurden, und den Konzentrationsvoraussagen, die durch das Voraussageprogramm des Nebenalgorithmus berechnet wurden, Sollwerte für die Durchsätze, die in den Reaktor eintreten, zu berechnen, wobei besagte Anpassungsparameter als zusätzliche Eingangsgrößen in besagtes Kontrollprogramm des Nebenalgorithmus eingehen.

10. Verfahren zur Regelung gemäß einem der vorhergehenden Ansprüche, das auf die Regelung der kontinuierlichen Polyethylensynthese durch Polymerisation von Ethylen in wenigstens einem Reaktor angewendet wird, wobei die Reaktanten Ethylen, Wasserstoff und/oder ein optionales Comonomer umfassen, die Polymerisationsreaktion in Gegenwart eines Katalysators stattfindet und ein Teil des Reaktorinhalts permanent oder mit Unterbrechungen entnommen wird.

11. Verfahren zur Regelung gemäß den Ansprüchen 9 und 10, bei dem das Anpassungsprogramm des Nebenalgorithmus die Messungen der Konzentrationen an Ethylen (Et), Wasserstoff (Hy) und/oder optionalem Comonomer (Bt) mit den von dem Voraussageprogramm des Nebenalgorithmus vorausgesagten Werten vergleicht, um wenigstens einen der folgenden Anpassungsparameter zu bestimmen:

a) die spezifische Aktivität des Katalysators für Ethylen "AEt" in kg/h Polyethylen pro kg Katalysator und pro $kg/m^3$ Ethylen;
b) den Verstärkungsfehler bei der Messung des Wasserstoffdurchsatzes "KfHy";
c) die Reinheit der Einspeisung an Comonomer "KfBt".

12. Verfahren zur Regelung gemäß einem der Ansprüche 1 bis 9, das auf die Regelung der kontinuierlichen Polypropylensynthese durch Polymerisation von Propylen in wenigstens einem Reaktor angewendet wird, wobei die Reaktanten Propylen, Wasserstoff und/oder ein optionales Comonomer umfassen, die Polymerisationsreaktion in Gegenwart eines Katalysators stattfindet und ein Teil des Reaktorinhalts permanent oder mit Unterbrechungen entnommen wird.

13. Verfahren zur Regelung gemäß den Ansprüchen 9 und 12, bei dem das Anpassungsprogramm des Nebenalgorithmus die Messungen der Konzentrationen an Propylen (Pe), Wasserstoff (Hy) und/oder optionalem Comonomer (Et) mit den von dem Voraussageprogramm des Nebenalgorithmus vorausgesagten Werten vergleicht, um wenigstens einen der folgenden Anpassungsparameter zu bestimmen:

a) die spezifische Aktivität des Katalysators für Propylen "APe" in kg/h Polypropylen pro kg Katalysator und pro $kg/m^3$ Propylen;
b) den Verstärkungsfehler bei der Messung des Wasserstoffdurchsatzes "KfHy";
c) die Reinheit der Einspeisung an Comonomer "KfEt".

14. Verfahren zur Regelung gemäß Anspruch 8, angewendet auf einen Polymerisationsprozeß, bei dem

- man den Fließindex in der Schmelze (MI) und/oder die Standarddichte (MVS) des Polymers und/oder seinen Gehalt an Comonomer periodisch mißt;
- das Voraussageprogramm des Hauptalgorithmus rohe Voraussagen von MI und MVS in Abhängigkeit von der Temperatur im Reaktor, von den Konzentrationen im Reaktor und den Verweilzeiten in den verschiedenen Apparaturen des Polymerisationskreislaufs berechnet;
- das Anpassungsprogramm des Hauptalgorithmus periodisch:

  - die rohen Voraussagen von MI und MVS unter Berücksichtigung der Zeit, die zwischen der Aufnahme der Messungen von MI und MVS und dem Erhalt des Ergebnisses der Messungen verstrichen ist, resynchronisiert und die resynchronisierten rohen Voraussagen von MI und MVS mit den Messungen von MI und MVS vergleicht,
  - einen multiplikativen Anpassungsparameter kMI, der auf die rohe Voraussage des MI angewendet wird, berechnet, um eine kalibrierte Voraussage des MI zu erhalten, und
  - einen additiven Anpassungsparameter kMVS, der auf die rohe Voraussage von MVS angewendet wird, berechnet, um eine kalibrierte Voraussage von MVS zu erhalten.

15. Verfahren zur Regelung gemäß einem der vorhergehenden Ansprüche, angewendet auf einen Polymerisationsprozeß, bei dem man eine oder mehrere Eigenschaften des Polymers unter Verwendung einer Technik, die unter der Nahinfrarotspektroskopie (NIR), der Fouriertransformationsinfrarotspektroskopie (FTIR) und der kernmagnetischen Resonanz (NMR) ausgewählt ist, bestimmt.

16. Verfahren zur Regelung gemäß einem der vorhergehenden Ansprüche, angewendet auf einen Polymerisationsprozeß, bei dem man eine oder mehrere Eigenschaften des Polymers unter Anwendung einer vorher erstellten Korrelationsbeziehung auf die Ergebnisse der Messungen, die durch Nahinfrarotspektroskopie (NIR) bei mehreren in Abhängigkeit von der Art des Polymers vorbestimmten Wellenlängen, die zwischen 0,8 und 2,6 μm gewählt sind, durchgeführt werden, bestimmt.

17. Prozeß zur Synthese eines chemischen Produkts in einer Apparatur, die wenigstens einen Reaktor, der mit einem ideal durchmischten Reaktor gleichgestellt werden kann, umfaßt, der mittels des Verfahrens zur Regelung gemäß einem der vorhergehenden Ansprüche geregelt wird.

18. Vorrichtung zur Regelung eines Prozesses zur Synthese eines chemischen Produkts in einer Syntheseapparatur, die umfaßt:

- wenigstens einen Reaktor, der mit einem ideal durchmischten Reaktor gleichgestellt werden kann;
- wenigstens ein Mittel, um einen Sollwert einer Eigenschaft (CGR) des zu synthetisierenden Produkts in die Recheneinheit einzugeben;
- wenigstens ein Mittel, um einen Sollwert der Durchsatzgeschwindigkeit des zu synthetisierenden Produkts (CGC) in die Recheneinheit einzugeben;
- wenigstens ein Kontrollprogramm (OC);
- wenigstens ein Voraussageprogramm (OP);
- wenigstens ein Mittel, um einem geeigneten Wirkglied einen Sollwert einer Steuerungsgröße (CGC) vorzugeben;

bei der das Verfahren zur Regelung einem der Ansprüche 1 bis 16 entspricht.

## Claims

1. Control method for a process of synthesis of at least one chemical product in an equipment comprising at least one reactor (R) which can be assimilated to a perfectly mixed reactor, in which one or more manipulated variables (GC) allow to act on the course of the process in order to make one or more variables related to the properties of the product and/or to the course of the process, which are called controlled variables (GR), equal to the corresponding set points ($C_{GR}$), the said method including the following steps:

(a) input of set points concerning the controlled variables ($C_{GR}$);
(b) computation, by means of a prediction unit (OP), of predictions of the controlled variables ($P_{GR}$), based on measurements of the process manipulated variables ($M_{GC}$);
(c) use of a control unit (OC) to compute the set points of the process manipulated variables ($C_{GC}$), based on the set points ($C_{GR}$) and the predictions ($P_{GR}$) of the controlled variables;
(d) transmission of the set points of the process manipulated variables ($C_{GC}$) to actuators, or to control units controlling the actuators, in order to act on the course of the process;

in which the prediction unit (OP) is based on a mathematical model of the process, called a direct model (M), characterized in that the prediction unit (OP) is designed in such a way that the mass $M_{XR}$ of at least one constituent (X) in the reactor (R) is predicted by the equation:

$$M_{XR} = LAG\ (F_{XRin} \cdot \tau_X,\ \tau_X)$$

in which:

- $F_{XRin}$ is the mass flow rate of the constituent X entering the reactor R;
- $\tau_X$ is the residence time of X in the reactor, the value of which is

$$\tau_X = M_{XR}/(\Sigma \ Fxdis)$$

in which:

- $M_{XR}$ denotes the last calculated value of the mass of the constituent X present in the reactor R;
- $\Sigma$ Fxdis denotes the sum of all the mass flow rates Fxdis at which the constituent X disappears from the reactor R, especially by reaction and/or by leaving the reactor;

- the function $y = LAG (u, \tau)$ is the solution of the differential equation

$$u = \tau \cdot \frac{dy}{dt} + y$$

calculated with the instantaneous value of u and of $\tau$, and with the last calculated value of y.

2. Control method according to Claim 1, in which the set point of at least one controlled variable ($C_{GR}$) is corrected on the basis of the deviation between the measurement ($M_{GR}$) and the prediction ($P_{GR}$) of this controlled variable, so as to make the control effective even in the presence of an error in the prediction of this controlled variable ($P_{GR}$).

3. Control method according to Claim 1, in which the model (M) of the process is periodically adapted on the basis of the deviation between the predictions ($P_{GR}$) and the measurements ($M_{GR}$) of the controlled variables, such that the model of the process should supply predictions of the controlled variables ($P_{GR}$) which are as near as possible to the measurements of these variables ($M_{GR}$).

4. Control method according to Claim 3, in which the measurements ($M_{GR}$) of the controlled variables are involved only in the optional adaptation of the model of the process and are not directly involved in the calculation of the set points of the manipulated variables of the process ($C_{GC}$).

5. Control method according to one of Claims 1 to 4, applied to a polymerization process, including one or more of the following additional steps:

- calculation of a set point of temperature in the reactor as a function of one or more set points of the product properties; and transmission of this temperature set point to one or more actuators making it possible to modify the temperature in the reactor;
- calculation of a heat balance for the reactor, based especially on temperature measurements; use of this heat balance so as to determine the quantity of polymer synthesized per time unit and/or the catalyst efficiency and/or the concentration of at least one reactant in the reactor;
- calculation of the quantity of heat produced by the polymerization, by a calculation of the quantity of the reactant or reactants which polymerize; determination by this means of the quantity of heat which must be added or removed to maintain the reactor temperature; use of the result of the said calculation to improve the temperature control, so as to conform as well as possible to the set point of temperature, especially in the case of changes in the production rate.

6. Control method according to one of the preceding claims, in which the property $Px_R$ of a constituent "x" in the reactor R, assimilated to a perfectly mixed reactor, is calculated as follows:

$$Px_R = LAG (Px_{IN}, Mx_R/Fx_{IN})$$

where

"Px" is a property of a constituent "x", corresponding substantially to the linear mixing law $Px_{1+2} = w_1 \cdot Px_1 + w_2 \cdot Px_2$,
$w_1$ and $w_2$ being the mass fractions of two mixed fractions 1 and 2 of property $Px_1$ and $Px_2$;
$Px_{1+2}$ is the property of x as it leaves the reactor after mixing;
$Px_{IN}$ is the property of the constituent "x" as it enters the reactor R;
$Mx_R$ is the mass of the constituent x in the reactor R;

$Fx_{IN}$ is the mass flow rate of the constituent x entering the reactor R.

7. Control method according to one of the preceding claims, including the following steps:

- input of set points relating to one or more properties of the product to be synthesized, into a master algorithm;
- input of the set point of the production rate of the process into a slave algorithm;
- computation of the set points of concentration of the constituents in the reactor with the master algorithm, especially as a function of the set points and of the measurements of the product properties and of measurements or predictions of the concentrations of the various constituents in the reactor;
- transmission of the set points of concentration which are calculated by the master algorithm as input variables into the slave algorithm;
- computation of flow rate set points of the constituents entering the reactor, with the slave algorithm, especially as a function of the set point of the process production rate, of concentration set points and of flow rate measurements of the constituents entering the reactor, and
- transmission of the flow rate set points which are calculated with the slave algorithm to one or more actuators in order to control the flow rates of the constituents entering the reactor,

in which the master algorithm and/or the slave algorithm are used in accordance with one of the preceding claims.

8. Control method according to Claim 7, characterized in that the master algorithm includes:

- a prediction unit based on a direct model of the process allowing to supply a prediction of the properties of the synthesized product as a function of measurements and/or of predictions of the concentrations of the constituents;
- an adaptation unit comparing the predictions of properties calculated by the prediction unit with values actually measured on the synthesized product and deriving adaptation parameters from this comparison, the said adaptation parameters being involved as additional inputs into the said prediction unit of the master algorithm; and
- a control unit based on a reverse model of the process, for computing, as a function of the set points and of the predictions of properties of the product to be synthesized, concentrations set points for the slave algorithm, the said adaptation parameters also being involved as additional inputs into the said control unit.

9. Control method according to either of Claims 7 and 8, in which the slave algorithm includes:

- a prediction unit based on a direct model of the process allowing to supply a prediction of the concentrations of one or more of the constituents, based on a material balance in the reactor;
- an adaptation unit comparing the predictions of concentrations calculated by the direct model with measurements of concentration and deriving adaptation parameters from this comparison, the said adaptation parameters being involved as additional inputs into the said prediction unit of the slave algorithm; and
- a control unit based on a reverse model of the process, for computing, as a function of the production rate set point, of the concentration set points computed by the control unit of the master algorithm and of the predictions of concentration which are computed by the prediction unit of the slave algorithm, the set points for the flows entering the reactor, the said adaptation parameters being involved as additional inputs into the said control unit of the slave algorithm.

10. Control method according to one of the preceding claims, applied to the control of the continuous synthesis of polyethylene by polymerization of ethylene in at least one reactor, the reactants including ethylene, hydrogen and/or an optional comonomer, the polymerization reaction taking place in the presence of a catalyst and part of the content of the reactor being continuously or intermittently removed.

11. Control method according to Claims 9 and 10, in which the adaptation unit of the slave algorithm compares the measurements of the concentrations of ethylene (Et), hydrogen (Hy) and/or optional comonomer (Bt) with the values predicted by the prediction unit of the slave algorithm, so as to determine at least one of the following adaptation parameters:

a) the specific activity of the catalyst for ethylene "AEt", in kg/h of polyethylene per kg of catalyst and per kg/$m^3$ of ethylene;
b) the gain error in the measurement of flow rate of hydrogen "KfHy";

c) the purity of the comonomer feed "KfBt".

12. Control method according to one of Claims 1 to 9, applied to the control of the continuous synthesis of polypropylene by polymerization of propylene in at least one reactor, the reactants including propylene, hydrogen and/or an optional comonomer, the polymerization reaction taking place in the presence of a catalyst and part of the content of the reactor being continuously or intermittently removed.

13. Control method according to Claims 9 and 12, in which the adaptation unit of the slave algorithm compares the measurements of the concentrations of propylene (Pe), hydrogen (Hy) and/or optional comonomer (Et) with the values predicted by the prediction unit of the slave algorithm, so as to determine at least one of the following adaptation parameters:

a)the specific activity of the catalyst for propylene "APe", in kg/h of polypropylene per kg of catalyst and per $kg/m^3$ of propylene;
b)the gain error in the measurement of hydrogen flow rate "KfHy";
c)the purity of the comonomer feed "KfEt".

14. Control method according to Claim 8 applied to a polymerization process, in which:

- the melt index (MI) and/or the standard density (SD) of the polymer and/or its comonomer content are measured periodically;
- the prediction unit of the master algorithm calculates raw predictions of MI and of SD as a function of the temperature in the reactor, of the concentrations in the reactor and of the residence time in the various units of equipment in the polymerization circuit;
- periodically, the adaptation unit of the master algorithm:

   - resynchronizes the raw predictions of MI and SD, taking into account the time elapsed between the taking of the measurements of MI and SD and obtaining the result of the measurements, and compares the resynchronized raw predictions of MI and SD with the measurements of MI and SD,
   - calculates a multiplicative adaptation parameter kMI applied to the raw prediction of the MI to obtain a calibrated prediction of the MI, and
   - calculates an additive adaptation parameter kSD applied to the raw prediction of SD to obtain a calibrated prediction of SD.

15. Control method according to one of the preceding claims, applied to a polymerization process, in which one or more properties of the polymer are evaluated by employing a technique chosen from near infrared spectroscopy (NIR), Fourier transform infrared spectroscopy (FTIR) and a nuclear magnetic resonance (NMR).

16. Control method according to one of the preceding claims, applied to a polymerization process, in which one or more properties of the polymer are evaluated by applying a preestablished correlation relationship to the results of measurements carried out by near infrared spectroscopy (NIR) at a number of wavelengths predetermined as a function of the nature of the polymer and chosen between 0.8 and 2.6 μm.

17. Process of synthesis of a chemical product in equipment including at least one reactor which can be assimilated to a perfectly mixed reactor, controlled by means of the control method according to one of the preceding claims.

18. Device for controlling a process of synthesis of a chemical product in an equipment for synthesis including:

- at least one reactor which can be assimilated to a perfectly mixed reactor;
- at least one means for inputting a set point of property ($C_{GR}$) of the product to be synthesized into the computing unit;
- at least one means for inputting a set point of production rate of the product to be synthesized (CGC) into the computing unit;
- at least one control unit (OC);
- at least one prediction unit (OP);
- at least one means for imposing a control variable (CGC) on a suitable actuator;

in which the control method is in accordance with one of Claims 1 to 16.

Fig 1

Fig. 2

$$MI = f(kMI, Hy/Et, Bt/Et, T°)$$
$$MVS = f(kMVS, Hy/Et, Bt/Et, T°)$$

Fig. 3

Fig. 4

**Fig. 5**

Et, Hy, Bt, Cata

**43**

62
(Et, Hy, Bt,
Cata, Sv)

**64**

65
(Et, Hy, Bt)

AEt
KfHy
KfBt

**44**

63
(Et, Hy, Bt)

**66**
(AEt, KfHy, KfBt)

AEt
KfHy
KfBt

31

**32**

34
(Et, Hy, Bt,)

**55**

35
(Et, Hy, Bt, Cata)

# Fig. 6

Fig. 7

Fig. 8

Fig. 9

Fig. 10